# EUROPEAN PATENT APPLICATION

(11) **EP 1 079 627 A1**
(43) Date of publication of application: **28.02.2001**
(21) Application number: 00307281.6
(22) Date of filing: 23.08.2000
(51) Int. Cl.: H04N 7/167, H04N 7/24, H04N 5/913, G06T 1/00

(54) **Copyright protection in MPEG-4 using digital watermarking**

(30) Priority: 27.08.1999 JP 24172099; 31.08.1999 JP 24672399; 18.01.2000 JP 2000008868
(71) Applicant: CANON KABUSHIKI KAISHA, Tokyo (JP)
(72) Inventor: Wakao, Satoru, Tokyo (JP); Iwamura, Keiichi, Tokyo (JP)
(74) Representative: Beresford, Keith Denis Lewis

(57) **Abstract**

An IPMP controller extracts copyright information contained in an IPMP stream from an MPEG-4 datastream that contains object streams each having predetermined information, and a watermark extraction unit extracts watermark information contained in each object stream. Key information of the object stream is generated using player information which is unique to a player that receives and plays back the datastream, and the extracted copyright information and watermark information. Based on the key information (225), at least one object stream is descrambled by a descrambler, and the descrambled data is decoded by a decoder and is played back by the player.

## Description

### FIELD OF THE INVENTION

The present invention relates to a data processing method, data processing apparatus, data processing system, and a storage medium therefor and, more particularly, to a data processing method, data processing apparatus, data processing system, and a storage medium therefor, which play back information from a plurality of object streams.

### BACKGROUND OF THE INVENTION

MPEG-1 is used as data encoding & multiplexing standards used in Video CD or the like, MPEG-2 is used as those used in DVD, digital broadcast, and the like, and various products and services using these standards have prevailed. Most of contents (the contents of information) used in these products and services are copyrighted, and means for protecting these copyrighted contents from illegal copies is required. As such protection means, contents data is often scrambled.

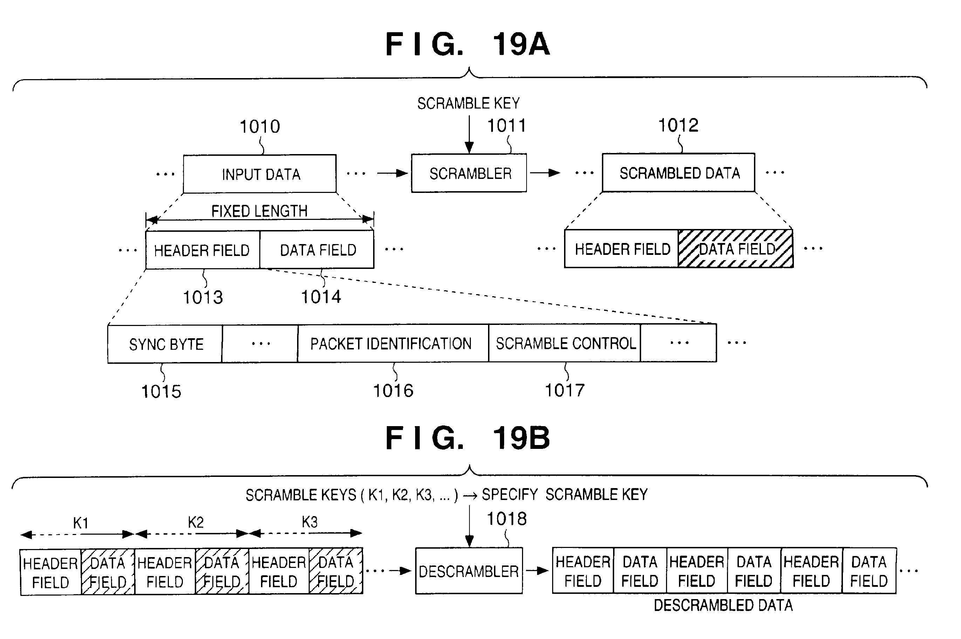

An example of the scramble mechanism will be explained below with reference to Figs. 19A and 19B.

When input data (fixed length) 1010 to be scrambled is input to a scrambler 1011, the scrambler 1011 scrambles only a data field 1014 of the input data 1010 in accordance with a scramble key set in advance, and outputs it as scrambled data 1012. In order to improve security, it is proposed to update the scramble key at given time intervals. That is, there are a plurality of scramble keys.

On the other hand, a header field 1013 of the input data 1010 is not scrambled since it contains information such as a sync byte 1015, packet identifier 1016, scramble control 1017, and the like, which are required for descrambling scrambled data. Also, the scramble key used upon scrambling the input data must be sent to a descrambler 1018 via a certain route.

Upon receiving the scrambled data, the descrambler 1018 specifies a key to be used from a plurality of scramble keys sent from the scrambler 1011 via a certain route on the basis of information such as the sync byte 1015, packet identifier 1016, scramble control 1017, and the like, and descrambles the data using the specified key.

Such scramble is prevalently used in MPEG-1 and MPEG-2.

However, in recent years, as a scheme which encodes moving picture data, audio data, and the like, handles these encoded data as objects, and combines and transmits these so-called multimedia data as a single bitstream, MPEG-4 (Moving Picture Experts Group Phase 4) is standardized in ISO. The receiving side (playback side) of MPEG-4 plays back audio data and moving picture scenes in association with each other. Since such MPEG-4 system handles data as objects, the received bitstream can be disassembled in units of objects and such objects can be reordered. When each object is copyrighted, all or some data must undergo use restriction to achieve copyright protection.

The aforementioned MPEG-4 datastream has a function of independently sending/receiving many video scenes and video objects on a single stream unlike conventional multimedia streams. As for audio, the datastream has a function of independently sending/receiving many objects on a single stream.

As information for mixing these objects into a given scene, BIFS (Binary Format For Scenes) as a modification of VRML is available. In BIFS, scenes are described in binary form, and scenes are composited according to BIFS.

Since individual objects required for compositing a scene are sent after they individually undergo optimal encoding, the decoding (receiving) side individually decodes these objects. The decoded objects are composed and outputted as a scene by synchronizing the time axes of individual data with that of a player in accordance with a BIFS description.

In this manner, since the MPEG-4 player composes a plurality of objects, if one of such objects is copyrighted, that object must undergo use restriction.

In general, in order to achieve copyright protection, the sending side scrambles data to be sent or inserts a digital watermark, and the receiving side, i.e., the player acquires information or the like required for descrambling the scrambled data to descramble the received data and plays back data such as moving picture data, audio data, and the like, only when appropriate cost is paid for its copyright.

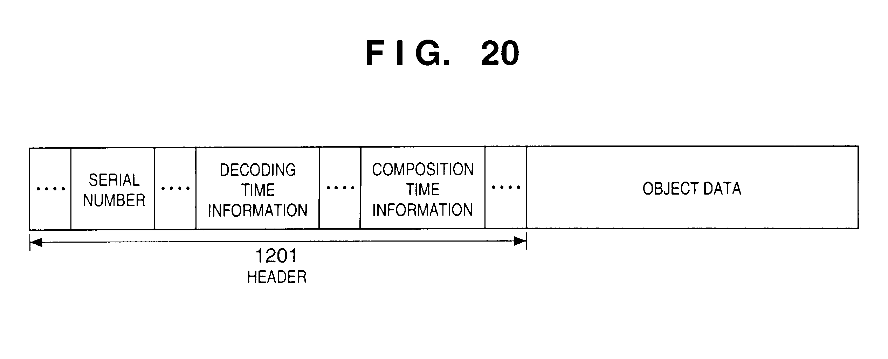

In case of MPEG-4, if playback restriction can be imposed by scrambling object data by the same method as in MPEG-1 and MPEG-2, no problem is posed. However, in MPEG-4, the format of data, especially, the format of the header 1013 is considerably different from MPEG-1 and MPEG-2, as shown in Fig. 20, and the aforementioned conventional method cannot be applied as it is, for the following reason.

In MPEG-1 and MPEG-2, after the beginning of a packet is recognized based on the sync byte 1015, the value of the scramble control 1017 is read. The player specifies one of a plurality of keys held therein using the value of the scramble control 1017, and descrambles data using the specified key. By contrast, since MPEG-4 does not have any scramble control 1017 shown in Fig. 19A, the player cannot specify one of a plurality of keys held therein. That is, since the key cannot be specified, data cannot be descrambled.

MPEG-4 is characterized by encoding/decoding data in units of objects; data is digital data, and it is easy to form its copy. A copy of digital data is completely the same as original data unlike that of analog data. It is not desirable for copyright holders that copies of copyrighted data are distributed as pirated versions. Hence, a copyright protection mechanism which guarantees higher security than that for MPEG-1 and MPEG-2 is required. Despite that, there are no proposals about a method and apparatus for efficiently scrambling MPEG-4 data.

Also, in a copyright protection method in MPEG-4 using digital watermarking, object streams are demultiplexed from a datastream containing a plurality of object streams each having predetermined information, and a video decoder for decoding moving picture data is started. The video decoder decodes moving picture data, and extracts copyright information embedded as a digital watermark, which is authenticated with data in a management stream for protecting intellectual properties. If the authentication result indicates "playback permission", an operation start/proceed command is issued to the video decoder. In this manner, decoded moving picture data is supplied to a scene composition circuit to allow the user to view moving picture data.

On the other hand, if the authentication result indicates "playback denial", an operation stop command is issued to the video decoder or a data transfer stop command to the video decoder is issued. Hence, the decoded moving picture data ceases to be supplied to the scene composition circuit, thus prohibiting the user from viewing the moving picture data.

However, in the conventional method, the copyright information embedded as a digital watermark in data in a given object stream is extracted once the data of that stream has been decoded. This means that image data, audio data, and the like are present in a memory of the player not to be protected by scramble or the like, since they have been decoded once. Therefore, if an ill-disposed third party has an environment capable of copying such data stored in the memory, the decoded data are illegally copied. However, no proposals have been made about any practical method for combating such situation in the MPEG-4 system.

### SUMMARY OF THE INVENTION

The present invention has been made in consideration of the aforementioned prior art, and has as its object to provide a data processing method and apparatus, which can make playback control of object data using control information and peculiar information contained in the object data.

It is another object of the present invention to provide a data processing method and apparatus, which can make descramble playback control of object data using copyright information and watermark information contained in the object data.

It is still object of the present invention to provide a data processing method and apparatus, which can prevent a user who should not decode/play back data from playing back object data by descrambling object data on the basis of key information generated using at least one of watermark information and copyright information.

It is still object of the present invention to provide a data processing method and apparatus, which can prevent object data which should not be played back from being played back or stored in a memory beforehand by extracting a digital watermark before decoding of object data.

It is still object of the present invention to provide a data processing method and apparatus, which can efficiently manage intellectual properties, e.g., copyrights, of input data, and can protect copyrighted data from illegal copies and the like.

A data processing apparatus according to the present invention comprises the following configuration.

That is, there is provided a data processing apparatus comprising:
input means for inputting a datastream containing at least one scrambled object stream having predetermined information;
demultiplexing means for demultiplexing the object stream from the datastream input by the input means;
copyright information extraction means for extracting copyright information contained in the datastream;
key information generation means for generating key information using the copyright information;
descramble means for descrambling the object stream demultiplexed by the demultiplexing means on the basis of the key information; and
decoding means for decoding the object stream descrambled by the descramble means to obtain the predetermined information.

A data processing apparatus according to the present invention comprises the following steps.

That is, there is provided a data processing method for demultiplexing an object stream from a datastream that contains the object streams having predetermined information, and playing back the object stream, comprising the steps of:
extracting copyright information contained in the datastream;
generating key information using at least one of ID information unique to a user or an apparatus that receives and plays back the datastream, and the copyright information; and
controlling to descramble the object stream on the basis of the key information.

A data processing method according to the present invention comprises the following steps.

That is, there is provided a data processing method for demultiplexing an object stream from a datastream containing at least one scrambled object stream having predetermined information, a scene description information stream used to compose information contained in the object stream, and a management stream used to protect an intellectual property of the information, descrambling and decoding the scrambled object stream, and compositing and outputting decoded data on the basis of information of the scene description information stream, comprising the steps of:
extracting copyright information contained in the datastream;
generating key information using at least one of ID information unique to a user or an apparatus that receives and plays back the datastream, and the copyright information; and
controlling to descramble and decode the scrambled object stream on the basis of the key information.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the descriptions, serve to explain the principle of the invention.
Fig. 1 is a schematic block diagram showing the basic arrangement of an MPEG-4 player according to the first embodiment of the present invention;
Fig. 2 is a functional block diagram for explaining the operation of a data processing apparatus according to the first embodiment of the present invention;
Fig. 3 is a flow chart for explaining the operation of the data processing apparatus of the first embodiment;
Fig. 4 is a functional block diagram of a data processing system containing the data processing apparatus according to the first embodiment and a sender apparatus;
Fig. 5 is a block diagram showing the arrangement of a data processing apparatus according to the second embodiment of the present invention;
Fig. 6 is a block diagram for explaining the control operation in the data processing apparatus of the second embodiment;
Fig. 7 is a flow chart for explaining the flow of processes executed by the data processing apparatus of the second embodiment;
Fig. 8 is a timing chart for explaining the control operation executed by the data processing apparatus of the second embodiment;
Fig. 9 is a timing chart for explaining the control operation executed by the data processing apparatus of the second embodiment;
Fig. 10 is a block diagram showing the arrangement of a sender apparatus according to the third embodiment of the present invention;
Fig. 11 shows an example of edit data in the third embodiment;
Fig. 12 shows an example of a key table used in the sender apparatus of the third embodiment;
Fig. 13 shows an example of IPMP data according to the third embodiment;
Fig. 14 is a view for explaining the data format of moving picture data in MPEG-4;
Fig. 15 is a view for explaining the data format of a scrambled output in the third embodiment;
Fig. 16 is a flow chart for explaining the operation of the sender apparatus of the third embodiment;
Fig. 17 is a block diagram showing the arrangement of a player according to the third embodiment;
Fig. 18 shows an example of a key table used in the player of the third embodiment;
Figs. 19A and 19B are views for explaining a conventional scramble process for MPEG-1 and MPEG-2 data; and
Fig. 20 shows the data format of an output in MPEG-4.

### DETAILED DESCRIPTION OF THE EMBODIMENTS

The preferred embodiments of the present invention will be described in detail hereinafter with reference to the accompanying drawings.

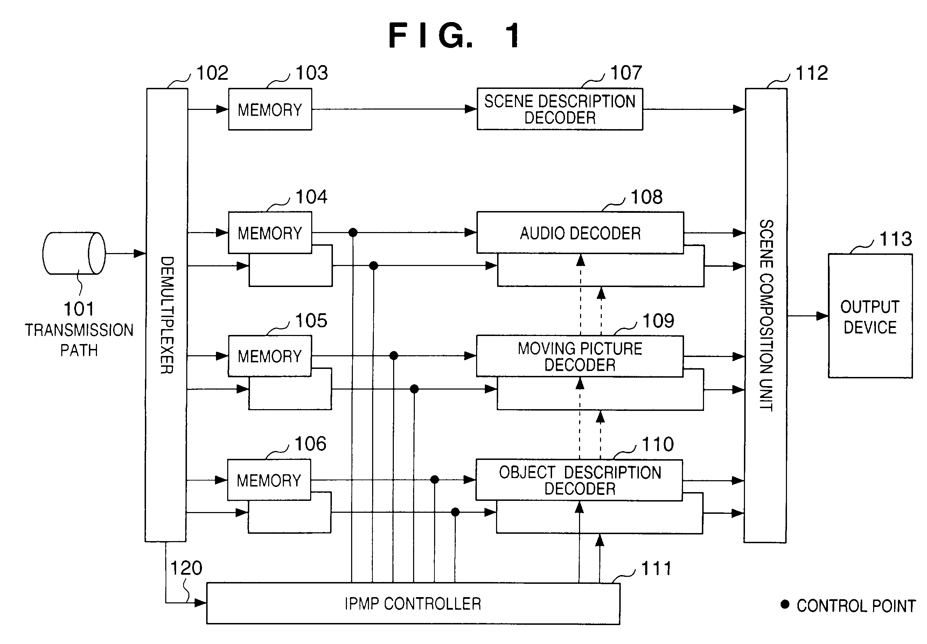

In the first embodiment of the present invention, a schematic arrangement of a general MPEG-4 player shown in Fig. 1 will be explained first, and an example of a descramble process of the player according to this embodiment will then be explained. Furthermore, the operation of the player according to the first embodiment will be explained using the flow chart showing an example of the operation, and an example of the entire system including a sender apparatus will be explained last.

### [First Embodiment]

Fig. 1 is a schematic block diagram showing the basic arrangement of an MPEG-4 player according to the first embodiment of the present invention.

Referring to Fig. 1, a transmission path 101 is a data transmission path such as various networks, computer buses, and the like, and indicates a network to which an MPEG-4 stream is input in this embodiment. The transmission path 101 in this embodiment also means an interface with a playback device of storage media such as a CD-ROM, DVD-ROM, DVD-RAM, and the like in addition to a communication path.

In the apparatus of this embodiment, an MPEG-4 stream distributed from the transmission path 101, i.e., the network, or an MPEG-4 stream sent from a reader of a storage medium or the like is input to a demultiplexer 102. The MPEG-4 stream is demultiplexed into scene description data, moving picture object data, audio object data, object description data, and the like, which are respectively input to and saved in corresponding memories 103 to 106. That is, the memory 103 stores scene description data, the memory 104 stores audio object data, the memory 105 stores moving picture object data, and the memory 106 stores object description data.

Note that the audio object data has undergone high-efficiency encoding such as known CELP (Code Excited Linear Prediction) encoding, transform-domain weighted interleave vector quantization (TWINVQ) encoding, or the like, and the moving picture object data has undergone high-efficiency encoding by, e.g., known MPEG-2, III H-263, or the like.

The object data stored in the memories 103 to 106 are respectively input to corresponding decoders 107 to 110. In this manner, the scene description decoder 107, audio decoder 108, moving picture decoder 109, and object description decoder 110 respectively decode the scene description data, audio object data, moving picture object data, and object description data, which have undergone high-efficiency encoding, as described above.

Since this embodiment assumes an apparatus capable of decoding data even when a plurality of different types of objects are present in an MPEG-4 stream, in each of the audio object, moving picture object and object description data, a plurality of sets of the memories 104 to 106 and the decoders 108 to 110 are prepared.

The audio object, moving picture object, and object description data decoded by the decoders 108 to 110 undergo a composition/graphic process in a scene composition unit 112 on the basis of the scene description data decoded by the scene description decoder 107. A final data sequence obtained in this manner is supplied to an output device 113 such as a display, printer, or the like, and is visualized and output.

In the received datastream of this embodiment, when individual object data such as audio object data, moving picture object data and the like, which form a scene, must undergo control for permitting or prohibiting playback to protect copyrights or the like, such control is made using IPMP (Intellectual Property Management and Protection) information. This IPMP information is sent using an IPMP stream as a building component of the received datastream.

An IPMP controller 111 intercepts a stream at a control point or accesses the decoders 108 to 110 to stop decoding as needed, on the basis of IPMP information 120 contained in an IPMP stream from the demultiplexer 102.

When it is determined based on the IPMP information 120 or the like that the user is not entitled to view object data, since the object data ceases to be decoded, its playback stops. With such control, copyrighted data can be prevented from being illegally received by a third party.

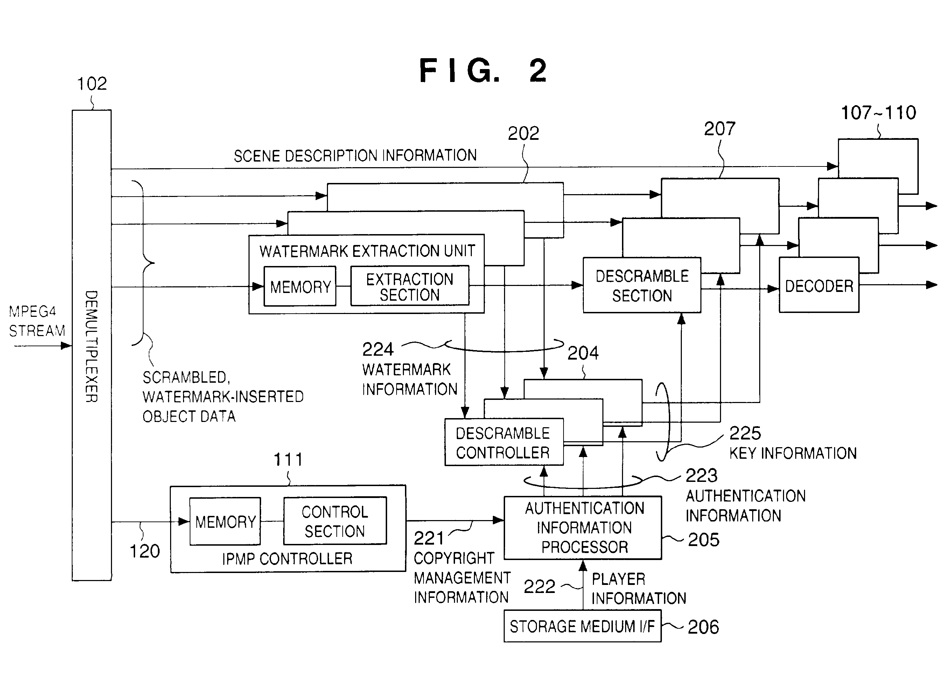

Fig. 2 is a block diagram for explaining an example of the descramble process in the player according to this embodiment. The same reference numerals in Fig. 2 denote common parts to those in Fig. 1 above, and a detailed description thereof will be omitted.

In Fig. 2, an authentication information processor 205 generates authentication information 223 using copyright management information 221 output from the IPMP controller 111, and player information 222 from a storage medium I/F 206, and sends the generated information to a descramble controller 204. The descramble controller 204 generates key information 225 using this authentication information 223 and watermark information 224 extracted by a watermark extraction unit 202, and outputs the key information to a descrambler 207. In this manner, scrambled data is descrambled. The descramble process will be explained in detail below.

Note that the copyright management information 221 is described in the IPMP information 120, the player information 222 is pre-stored in a storage medium of that player or pre-stored in an external storage medium which can be connected to the player, and the watermark information 224 is embedded as a digital watermark in object data.

After an MPEG-4 stream which contains scene description data, audio object data, moving picture object data, CG object data, object description data, IPMP information, and the like are demultiplexed by the demultiplexer 102 into individual object data, the audio object data, moving picture object data, CG object data, and the like are then sent to the watermark extraction unit 202, the IPMP information 120 to the IPMP controller 111, and the object description data to the decoder 110. A plurality of watermark extraction units 202 are provided in correspondence with object data, and each unit comprises a memory and extractor. The individual object data demultiplexed by the demultiplexer 102 are stored in the corresponding memories of the watermark extraction units 202. Note that copyrighted object data has undergone scramble in advance.

This scramble is done on the sending side of object data, and requires a scramble key. Only when the scrambled data is descrambled by a player of an authentic user, the key information 225 generated by the descramble controller 204 is controlled to be the same data as the scramble key. That is, the sender apparatus generates the watermark information 224, IPMP information 120, and player information 222. The apparatus embeds the watermark information 224 in object data, incorporates the IPMP information 120 in an IPMP stream, and then sends the stream. The player information 222 is pre-stored in the storage medium of the player or a storage unit which can be connected to the player by some method.

The player according to this embodiment generates the key information 225 using the copyright management information 221, player information 222, and watermark information 224, but there are a large number of pieces of information used upon generating a scramble key (i.e., key information) in the sender apparatus, and a large number of combinations of such information. Hence, the copyright holder of that data or a service provider selects information used and a combination of information. For this reason, a mechanism for informing the player of the selected and combined information is required. In this embodiment, the IPMP information 120 informs the player of the information that pertains to selection and combination.

In this way, the player of this embodiment interprets the IPMP information 120 first. The IPMP information 120 stored in a memory of the IPMP controller 111 is interpreted by a control section in the IPMP controller 111. This IPMP information 120 is made up of a header field and information field, which includes a flag field and actual data field. The actual data field describes the copyright management information 221. The MPEG-4 system defines the format of the header field of the IPMP information 120, but does not define the format of the actual data field. For this reason, the aforementioned configuration complies with the MPEG-4 system standards.

The header field of the IPMP information 120 stores information indicating if object data stored in the memory of the watermark extraction unit 202 is scrambled. More specifically, if IPMP_Type in the header field of the IPMP information 120 is "1", it indicates that the object data of interest is scrambled. Also, the flag field in the information field of the IPMP information 120 stores a watermark flag, authentication information flag, player information flag, and copyright management information flag, which respectively indicate if the watermark information 224 is embedded in the object data of interest, if the authentication information 223 is required upon generating the key information 225, if the player information 222 is required upon generating the authentication information 223, and if the copyright management information 221 is required upon generating the authentication information 223. In this case, if the flag indicates that the copyright management information 221 is "required", the actual data field of the IPMP information 120 describes the copyright management information 221.

This embodiment exemplifies a case wherein the authentication information 223 is generated using the copyright management information 221 and player information 222, the key information 225 is generated using the authentication information 223 and watermark information 224, and scrambled data is descrambled using the key information 225. Hence, in this embodiment, the watermark flag is ON, and the remaining flags are set to indicate that the authentication information 223, player information 222, and copyright management information 221 are "required".

The copyright management information 221 included in the IPMP information 120 is extracted by the control section of the IPMP controller 111, and is sent to the authentication information processor 205. Also, each watermark extraction unit 202 extracts the watermark information 224 from scrambled object data embedded with watermark information. The extracted watermark information 224 is sent to the descramble controller 204, and the object data from which that watermark information 224 has been extracted is sent to the descrambler 207.

The player information 222 included in the storage medium of the player, the storage unit connected to the player, or the like is extracted by the storage medium I/F 206, and is sent to the authentication information processor 205. The player information 222 is information unique to an individual player or user such as a player ID, user ID, or the like, and is sent offline from the sender apparatus or is pre-stored in the storage medium of the player or the storage unit. The authentication information processor 205 processes the player information 222 and copyright management information 221 to generate the authentication information 223, and sends the information 223 to the descramble controller 204. The descramble controller 204 generates the key information 225 on the basis of the watermark information 224 extracted by the watermark extraction unit 202 and the authentication information 223 sent from the authentication information processor 205, and sends the key information 225 to the descrambler 207. If the player is that of an authentic user, since this key information 225 becomes the same as the scramble key used upon scramble on the sending side, the descrambler 207 can normally descramble scrambled object data sent from the watermark extraction unit 202.

On the other hand, if the player is that of an unauthentic user, since the key information 225 generated by the descramble controller 204 is not the same as the scramble key used upon scramble on the sending side, the descrambler 207 cannot normally descramble scrambled data.

The data descrambled by the descrambler 207 is decoded by a corresponding one of the decoders 107 to 110, thus outputting data such as moving picture data, still picture data, CG data, or the like.

As described above, according to this embodiment, in the player of the user which is not granted permission to play back data, since object data is present in a memory or the like as scrambled data, copyrighted data can be protected from being illegally copied by a third party.

Furthermore, since a digital watermark is embedded in object data to be sent, the transmission efficiency can be improved by the amount of data embedded as a watermark. Furthermore, since important information as a basis of key information is embedded, security improves.

In the above description, the authentication information 223 is generated using the copyright management information 221 and player information 222, the key information 225 is generated using the authentication information 223 and watermark information 224, and scrambled data is descrambled using the key information 225. Alternatively, the key information 225 may be generated using at least one of these watermark information 224, player information 222, and copyright management information 221, and may be used in descramble. In this case, the player interprets the contents of the header field and information field of the IPMP information 120, acquires required information from the watermark information 224, player information 222, and copyright management information 221, and processes the acquired information to finally generate the key information 225 used in descramble.

As for a method of simultaneously making embedding of given information and scramble in an MPEG stream, and extracting embedded information before descramble on the player side, refer to "Scramble Associated with Compressed Moving Picture - A Scheme of Digital Watermarking" (21st Symposium of Information Theory and its Application).

In general, in MPEG an image is segmented into 16 × 16 (pixels) macroblocks, which undergo frame prediction, and undergoes DCT (discrete cosine transformation) in units of 8 × 8 (pixel) blocks to compute their DCT coefficients. These DCT coefficients are zigzag-scanned after transformation, and are expressed as a variable-length codeword including a set of a runlength of zero coefficients and a level indicating coefficients. In such MPEG, a plurality of codewords having the same codeword length and runlength are present although they have different levels. Initially, codewords which have the same codeword length and runlength as those of codeword Ci to be scrambled/to undergo embedding are arranged so that a codeword having an even level value is located at an even position, and a codeword having an odd level value is located at an odd position. Then, a random number sequence Si is generated using a scramble key, and codeword Ci to be scrambled/to undergo embedding is replaced by codeword Ci' at the {2(Si mod N)+Wi}-th position, thus achieving scramble and embedding. In this case, N is the number of codewords having the same codeword length and runlength as those of Ci, and Wi is a value that assumes "1" or "0" (when information is embedded in the codeword of interest, "1" is selected; otherwise, "0" is selected).

The information embedded in this manner is extracted based on the fact that "1" is embedded if Ci' is at the odd position and "0" is embedded if Ci' is at the even position in the above arrangement.

Upon descramble, when Ci' is at an odd position, a codeword arranged in a direction opposite to the above position by {1+2(Si mod N)} is Ci. On the other hand, when Ci' is at an even position, a codeword arranged in a direction opposite to the above position by {2(Si mod N)} is Ci.

Using such scheme, information embedded in the scrambled MPEG stream can be extracted before descramble. However, the aforementioned scheme is not the one and only scheme, but it is possible to extract information embedded in the scrambled MPEG stream before descramble using other methods.

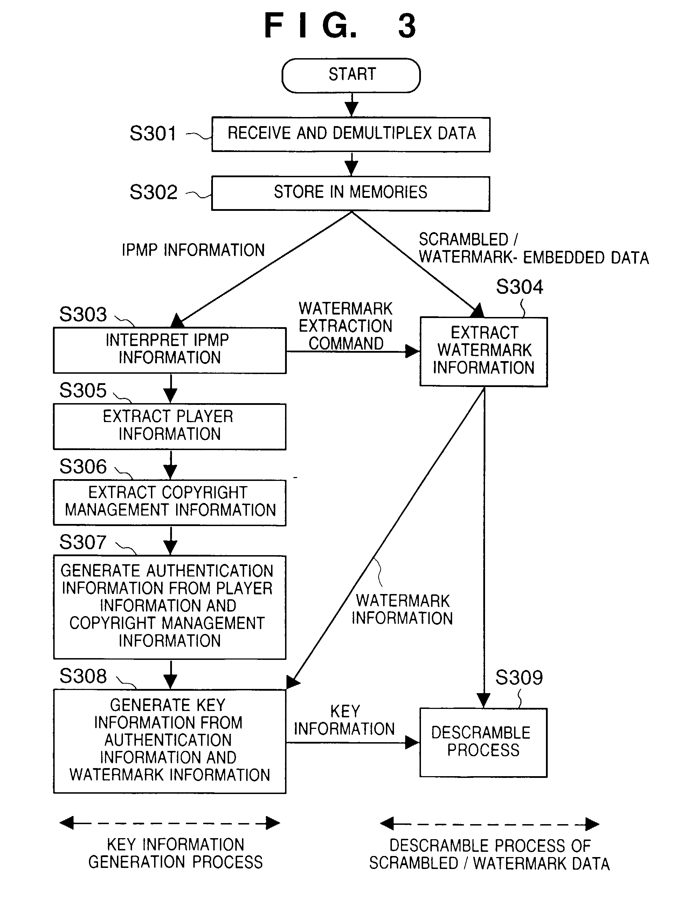

The operation in the player according to the first embodiment of the present invention, especially, an example of descramble control and a key information generation process, will be explained below with reference to the flow chart shown in Fig. 3.

Fig. 3 is a flow chart for explaining a descramble process for generating the authentication information 223 from the player information 222 and copyright management information 221, generating the key information 225 from the authentication information 223 and watermark information 224, and descrambling scrambled data using this key information 225, and a key information generation process, in the player of this embodiment. A series of processes will be explained below in two processing flows, i.e., generation of the key information 225, and descramble of scrambled data/watermark data.

In step S301, upon receiving an MPEG-4 stream containing scene description information, moving picture object data, audio object data, object description data, IPMP information, and the like, the player demultiplexes the stream into individual object data using the demultiplexer 102. In step S302, the individual object data demultiplexed by the demultiplexer 102 are stored in the corresponding memories. In this case, the IPMP information 120 is processed in a key information generation process routine, and the moving picture object data and audio object data which are scrambled/embedded with a watermark are processed in a descramble process routine. The processes in steps S303, S305, S306, S307, and S308 are executed by the key information generation process routine, and the processes in steps S304 and S309 are executed by the descramble process routine.

The key information generation process routine will be explained first. This process is implemented by the IPMP controller 111, descramble controller 204, and authentication information processor 205.

In step S303, information described in the IPMP information 120 is interpreted to determine the next operation to be done. In this embodiment, the authentication information 223 is generated from the player information 222 and copyright management information 221, and the key information 225 is generated from this authentication information 223 and watermark information 224. Since scrambled data is descrambled using this key information 225, the IPMP information 120 indicates that each object data is "scrambled and embedded with watermark", and the authentication information 223, player information 222, and copyright management information 221 are "required".

Hence, the key information generation process routine executes the following processes in turn: the player information 222 is extracted in step S305, the copyright management information 221 is extracted in step S306, the authentication information 223 is generated from the player information 222 and copyright management information 221 in step S307, and the key information 225 is generated from this authentication information 223 and watermark information 224 in step S308. In step S303, since the watermark flag in the IPMP information 120 indicates "watermark embedded", the key information generation process routine issues a watermark extraction command to the descramble process routine (S304; to be described later) to extract the watermark information 224 from each object data and input the watermark information 224 to the key information generation process routine (S308).

The respective steps will be explained below. In step S305, the player information 222 pre-stored in the storage medium of the player or the storage unit which can be connected to the player is extracted. In step S306, the copyright management information 221 described in the information field of the IPMP information 120 is extracted. The flow then advances to step S307 to generate the authentication information 223 from the player information 222 extracted in step S305 and the copyright management information 221 extracted in step S306.

The flow advances to step S308 to generate the key information 225 from the authentication information 223 generated in step S307 in the key information generation process routine, and the watermark information 224 extracted in the descramble process routine, and output the key information 225 to the descramble process routine (S309).

The descramble process routine will be explained below.

In step S304, since the watermark flag in the IPMP information 120 indicates "embedded", the watermark information 224 embedded in each object data such as moving picture object data, audio object data, or the like is extracted in accordance with the watermark extraction command from the key information generation process routine (S303). The extracted watermark information 224 is input to the key information generation process routine (S308).

In step S309, scrambled data is descrambled using the key information 225 generated in step S308. In case of a player of an authentic user, since correct key information 225 (the scramble key used to scramble object data on the sending side) is generated in the key information generation process routine, scrambled data can be normally descrambled. However, in case of a player of an unauthentic user, since incorrect key information 225 is generated, scrambled data cannot be normally descrambled.

By repeating such cycle, scrambled object data are descrambled. If the user of the player is not an authentic user of object data, since data are never normally descrambled, object data cannot be played back.

### [Description of Data Processing System]

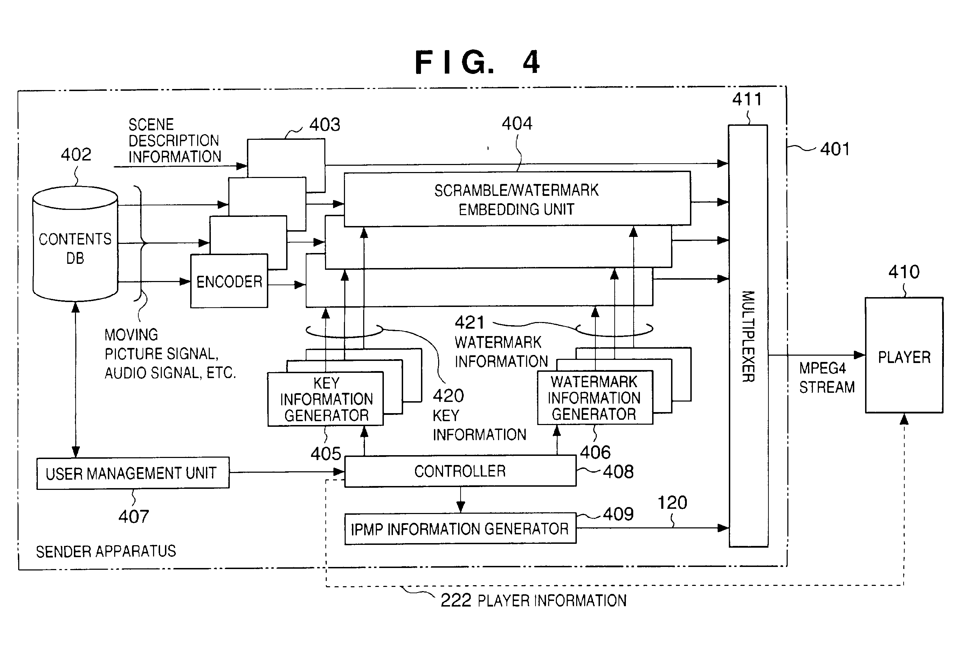

Fig. 4 shows an example of the arrangement of the overall data processing system including a player 410 according to the first embodiment described above, and a sender apparatus (encoding apparatus) 401 that sends encoded data to the player 410.

A contents DB 402 saves data such as moving picture data, audio data, CG data, and the like which are transmitted as contents of an MPEG-4 stream, and sends respective data to encoders 403 in accordance with a transmission request. Each encoder 403 makes high-efficiency encoding in accordance with data sent from the contents DB 402. The encoder 403 performs CELP encoding or transform-domain weighted interleave vector quantization encoding for audio data, and performs H-263 or compression coding based on DCT for moving picture data. Scene description information is sent to a multiplexer 411 immediately after it is encoded. This is because the scene description information is data required upon playing back individual objects, and is not contents data such as moving picture data, audio data, or the like, which may have copyrights. The data encoded by the corresponding encoders 403 are sent to scramble/watermark embedding units 404 and undergo scramble and insertion of a watermark. In a system that can simultaneously execute encoding, scrambling, and watermark embedding, the encoder 403 and scramble/watermark embedding unit 404 can be constructed as a single block.

The scramble/watermark embedding units 404 scramble the encoded audio, moving picture, and object description data on the basis of key information 420 from corresponding key information generators 405, and embed watermark information 421 from corresponding watermark information generators 406 in these data. Since this scramble is done for copyrighted data, data which need not be scrambled, i.e., is not copyrighted, is sent to the multiplexer 411 while skipping the scramble/watermark embedding unit 404. Also, data in which a watermark need not be embedded skips the scramble/watermark embedding unit 404.

Each key information generator 405 generates key information 420 under the control of a controller 408. This key information 420 is data used upon scrambling data in each scramble/watermark embedding unit 404, i.e., a scramble key.

Each watermark information generator 406 generates watermark information under the control of the controller 408. This watermark information 421 is data to be embedded in data in each scramble/watermark embedding unit 404.

In order to allow only the player of an authentic user to descramble, decode, and play back copyrighted contents data, the key information 420 used in scramble, the watermark information 421 to be embedded, IPMP information 120, and player information 222 must be correctly combined and sent to the player 410 at an accurate timing. The controller 408 controls the key information generators 405, watermark information generators 406, and an IPMP information generator 409 on the basis of control information from a user management unit 207, to manage generation processes of the key information 420, watermark information 421, and IPMP information 120, thus allowing only the player 410 as an authentic user of the contents to normally descramble scrambled data.

The player information 222 is information unique to an individual player or user such as a player ID, receiver ID, or the like, and is generated by the controller 408 and pre-stored in a storage medium of the player 410 or a storage unit connected to the player or is sent offline.

The user management unit 407 has information that pertains to encoded contents data to be sent and a subscriber. More specifically, the unit 407 has information as to whether or not the contents data is copyrighted. If the data is copyrighted, the information includes an authentic user (subscriber) name, subscription period, subscription pattern, user or player ID, and the like. Furthermore, the information may also include information indicating one or a plurality of watermark information, player information, and copyright management information required to generate key information 225 in the player 410 of the authentic user. The user management unit 407 sends the control information to the controller 408 based on such information.

The IPMP information generator 409 generates flag information indicating one or a plurality of watermark information, copyright management information, and player information used, and their combination, and actual data of copyright management information on the basis of the control information from the controller 408, generates IPMP information 120 based on such information, and sends the IPMP information 120 to the multiplexer 411.

For example, as has been explained with reference to Fig. 2, when "authentic information 223 is generated using copyright management information 221 and player information 22, key information 225 is generated using the authentication information 223 and watermark information 224, and scrambled data is descrambled using the key information 225", the header field of the IPMP information 120 is set with IPMP_Type = 1, and the flag field of its information field is set with information indicating that watermark information is "embedded", and authentication information, player information, and copyright management information are "required".

The multiplexer 411 multiplexes data of encoded moving picture data, audio data, CG data, and the like, scene description information, and IPMP information 120 to generate an MPEG-4 stream. After that, this MPEG-4 stream is output to the player 410.

When the MPEG-4 data processing system is built by the sender apparatus 401 and player 410, only an authentic player 410 can play back copyrighted object data, and an unauthentic player can handle only scrambled data, thus protecting copyrighted data.

As described above, according to this embodiment, at least one of a plurality of scrambled object streams is descrambled on the basis of key information. This key information is generated using at least one of watermark information, copyright management information, and player information. The watermark information is embedded in the object stream as a digital watermark, the copyright management information is contained in a stream for protecting and managing intellectual properties, and the player information is pre-stored in a storage medium of a data processing apparatus which demultiplexes, descrambles, and plays back object streams, or is stored in an external storage medium that can be connected to the data processing apparatus, thereby preventing non-scrambled copyrighted data from being present in a memory on a player of an unauthentic user. In this manner, copyrighted data can be protected from being illegally copied by a third party.

Since the watermark information is embedded as a digital watermark in object data, the transmission efficiency improves by the amount of data to be embedded as a watermark.

Furthermore, since important information as a basis of key information is embedded, security improves.

### [Second Embodiment]

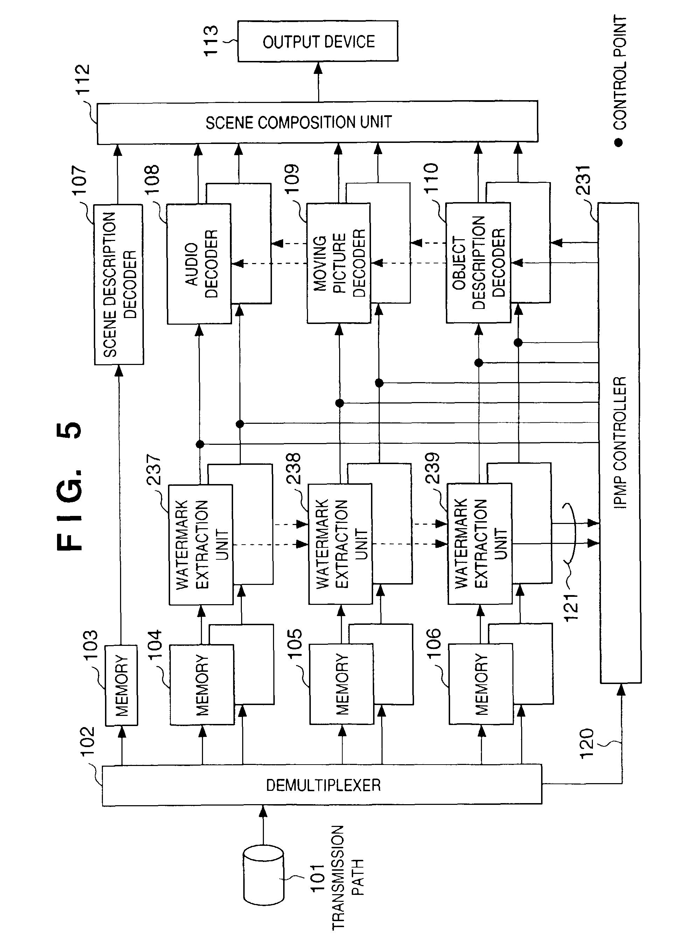

Fig. 5 is a schematic block diagram showing the arrangement of an MPEG-4 player according to the second embodiment of the present invention. Note that the same reference numerals in Fig. 5 denote the same parts as in Fig. 1, and a detailed description thereof will be omitted.

Object data in the memories 104 to 106 are respectively input to corresponding watermark extraction units 237 to 239, which extract control information embedded as watermark data. Extracted control information 121 is input to an IPMP controller 231. Note that scene description data input to and stored in the memory 103 is directly input to the scene description decoder 107. The object data from which the control information is extracted by the watermark extraction units 237 to 239 are input to the corresponding decoders 108 to 110. The scene description decoder 107, audio decoder 108, moving picture decoder 109, and object description decoder 110 respectively decode scene description data, audio object data, moving picture object data, and object description data that have undergone high-efficiency encoding mentioned above.

The IPMP controller 231 intercepts a stream at a control point or accesses the decoders 108 to 110 to stop decoding as needed, on the basis of at least one of IPMP information 120 included in an IPMP stream from the demultiplexer 102, or the control information 121 output from the watermark extraction unit 237 to 239.

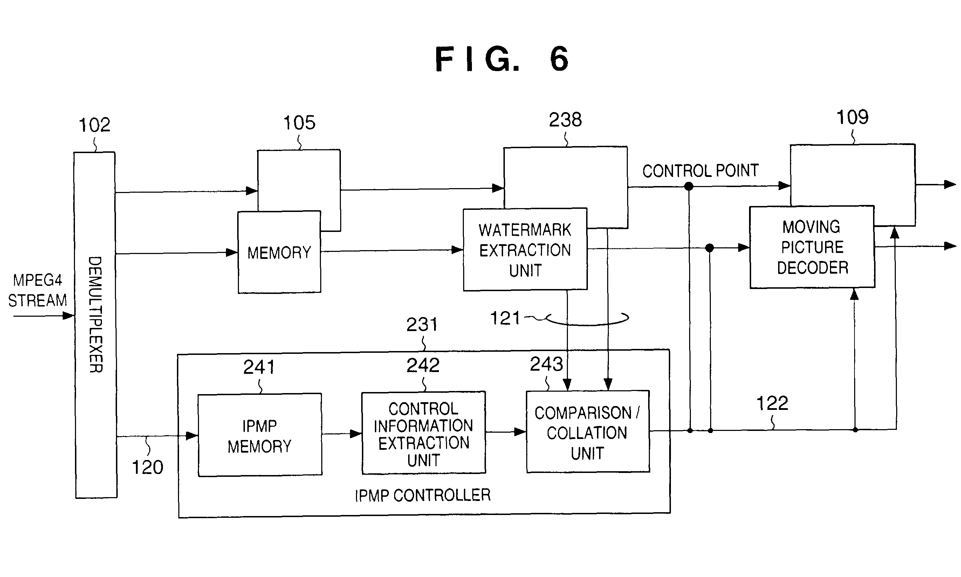

The processes of moving picture object data in the second embodiment will be explained below with reference to Fig. 6.

An MPEG-4 stream made up of scene description data, moving picture object data, audio object data, object description data, IPMP data, and the like is demultiplexed by the demultiplexer 102 into individual object data. Of these object data, the moving picture object data is input to one of the memories 105, and is then input to one of the watermark extraction units 238. Control information is often embedded as a digital watermark in copyrighted object data, and in such case, the watermark extraction unit 238 extracts that control information 121. The control information 121 is set/appended by the copyright holder of the object data. The extracted control information 121 is sent to a comparison/collation unit 243 of the IPMP controller 231.

On the other hand, the IPMP data demultiplexed by the demultiplexer 102 is input to and stored in an IPMP memory 241 of the IPMP controller 231, and unique information is extracted from the stored data by a control information extraction unit 242. The extracted unique information is information sent to each player while being included in the IPMP data. Furthermore, the comparison/collation unit 243 compares/collates the control information 121 from the watermark extraction unit 238 and the extracted unique information to generate determination information 122.

If only one of the control information and unique information is available, an authentication process is done using the available information to determine whether to play back object data or not. The obtained determination information 122 is output from the IPMP controller 231. When this determination information 122 is data that implies permission of playback, and when the authentication result indicates permission of playback, a decoding process start/proceed command is sent to the moving picture decoder 109. Upon receiving this command, the moving picture decoder 109 starts/proceeds with the decoding process of object data, and sends decoded data to the scene composition unit 112. On the other hand, when the determination information 122 is data that implies denial of playback of moving picture data, and when the authentication result indicates denial of playback, a decoding process stop command is sent to the moving picture decoder 109, or a stream is intercepted at the control point. With this control, since object data, playback of which is denied, is discarded without being decoded, no copyrighted data is present in a memory.

The control process of moving picture object data has been explained using Fig. 6. The same processes can be applied to various other object data such as audio object data and the like.

According to this method, an image frame is segmented into 8 × 8 (pixels) blocks (DCT blocks), and one of these blocks is selected to undergo DCT (discrete cosine transformation), thus computing DCT coefficients. The DCT coefficients are used in an MPEG compression algorithm. The DCT coefficient values are changed based on a predetermined formula, and then undergoes inverse DCT to restore an original image. This is the process executed upon embedding a watermark in an image frame. The position of the DCT block selected at that time serves as secret information, and watermark information is expressed by the presence/absence of embedding at that position. More specifically, when information bit "1" is embedded, a DCT block indicated by the secret information undergoes embedding by the aforementioned method. On the other hand, when information bit "0" is embedded, a DCT block indicated by the secret information does not undergo embedding.

A watermark extraction process in the watermark extraction unit 238 will be explained below.

In MPEG, since encoding and decoding are done in units of macroblocks (MBs) each consisting of four DCT blocks, one MB includes one embedded DCT block (that indicated by the secret information) and three non-embedded DCT blocks. Hence, the presence/absence of embedding is determined based on the deviation between the coefficient value of the embedded DCT blocks and the average value of the remaining DCT blocks. When embedding is done, information bit "1" is extracted from an image frame; otherwise, information bit "0" is extracted.

With this method, a watermark embedded in an MPEG stream can be extracted before decoding. However, the aforementioned method is not the one and only scheme, but other means for extracting a watermark before decoding can be available.

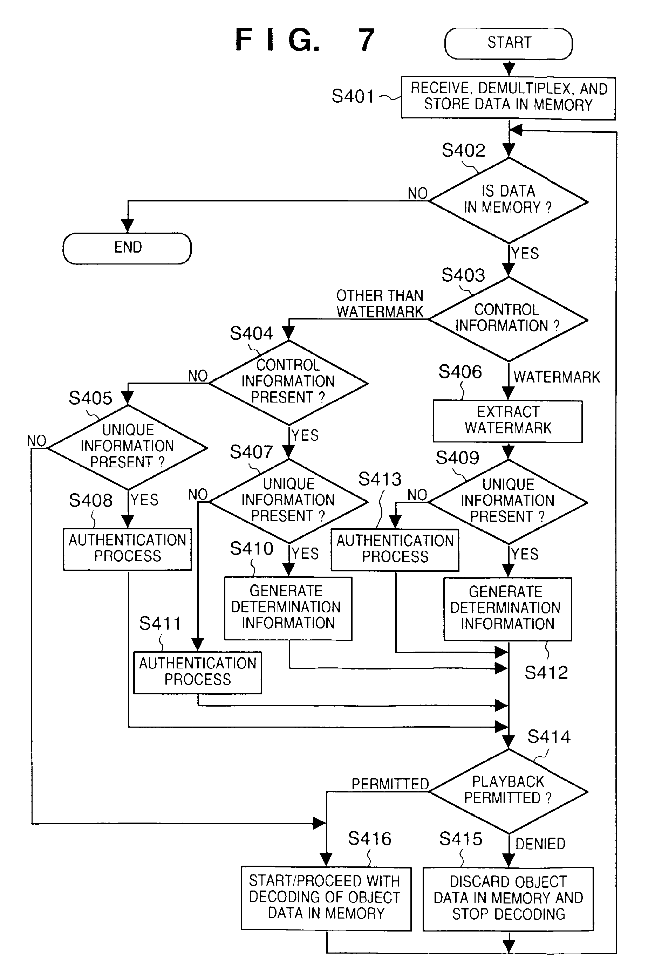

The operation of the apparatus of the second embodiment, especially, the control operation using IPMP information will be explained below using the flow chart shown in Fig. 7.

Fig. 7 is a flow chart showing the operation executed when the player 410 according to the second embodiment of the present invention receives an MPEG-4 stream containing a moving picture stream.

In step S401, upon receiving an MPEG-4 stream containing scene description information, moving picture object data, audio object data, object description data, IPMP data, and the like, the player 410 demultiplexes the stream into individual object data using the demultiplexer 102 and stores them in the corresponding memories.

The flow then advances to step S402 to check if object data is stored in the moving picture memory 105. If YES in step S402, the flow advances to step S403; otherwise, the process ends. It is checked based on IPMP data acquired from the demultiplexer 102 in step S403 if the control information 121 is embedded in the moving picture object data as a digital watermark. This checking is attained based on the format of the IPMP data. For example, if IPMPS_Type = "0" in a description of the IPMP object type located at the head of the IPMP data, it is determined that control information 121 is not embedded as a digital watermark; if IPMPS_Type = "1", it is determined that control information 121 is embedded as a digital watermark.

If the control information 121 is embedded as a digital watermark, i.e., if IPMPS_Type = "1", the flow advances to step S406, and the watermark extraction unit 238 extracts the embedded control information 121. If the control information is not embedded (that is, if the control information is appended using means other than digital watermarking or no control information is present), the flow advances to step S404 to check if the control information is present in a form other than a digital watermark. If YES in step S404, the flow advances to step S407 to check if unique information is present. If YES in step S407, the flow advances to step S410 to acquire the unique information, and determination information 122 is generated using the control information and unique information. The flow then advances to step S414. On the other hand, if it is determined in step S407 that no unique information is present, the flow advances to step S411 to execute an authentication process using only the control information. The flow then advances to step S414.

If it is determined in step S404 that no control information is present, the flow advances to step S405 to check if unique information is present. If YES in step S405, the flow advances to step S408 to acquire the unique information, and an authentication process is done using only the unique information. The flow then advances to step S414. On the other hand, if it is determined in step S405 that no unique information is present, it is determined that the moving picture object data is copyright-free data, and the flow advances to step S416 to start decoding of moving picture data.

After the embedded control information 121 is extracted in step S406, the flow advances to step S409 to check if unique information is present. If YES in step S409, the flow advances to step S412 to acquire the unique information. Determination information 122 is generated using the control information 121 extracted in step S406 and the unique information, and the flow then advances to step S414. On the other hand, if it is determined in step S409 that no unique information is present, the flow advances to step S413 to execute an authentication process using only the control information 121 extracted in step S406. The flow then advances to step S414.

It is checked in step S414 if the determination information 122 generated in the previous step indicates permission of playback or the authentication result in the previous step indicates permission of playback. If YES in step S414, the flow advances to step S416; otherwise, the flow advances to step S415. In step S416, a decoding process start/proceed command of moving picture object data is sent to the decoder 109. In response to this command, the decoder 109 decodes the moving picture object data stored in the memory 105, and sends the decoded moving picture object data to the scene composition unit 112. After that, the flow returns to step S402. On the other hand, if denial of playback is determined in step S414, the flow advances to step S415, and a decoding process stop command of object data is sent to the decoder 109. In response to this command, the decoder 109 stops decoding, and discards the moving picture object data in the memory 105. After that, the flow returns to step S402.

By executing the aforementioned process, the moving picture object data is decoded and played back. If playback of moving picture object data is denied, since that moving picture object data is never decoded, copyrighted data can be protected from being illegally copied by an ill-disposed third party.

The process for copyrighted moving picture data has been exemplified. The same method as that described above in this embodiment can also be applied to copyrighted audio data, still picture data, and the like.

When means for implementing the data processing method according to this embodiment is provided as a program, streams of audio data, moving picture data, IPMP information, and the like are processed by independent threads, and these threads must be synchronized. This embodiment uses mechanisms such as known semaphores, event flags, and the like to synchronize these threads.

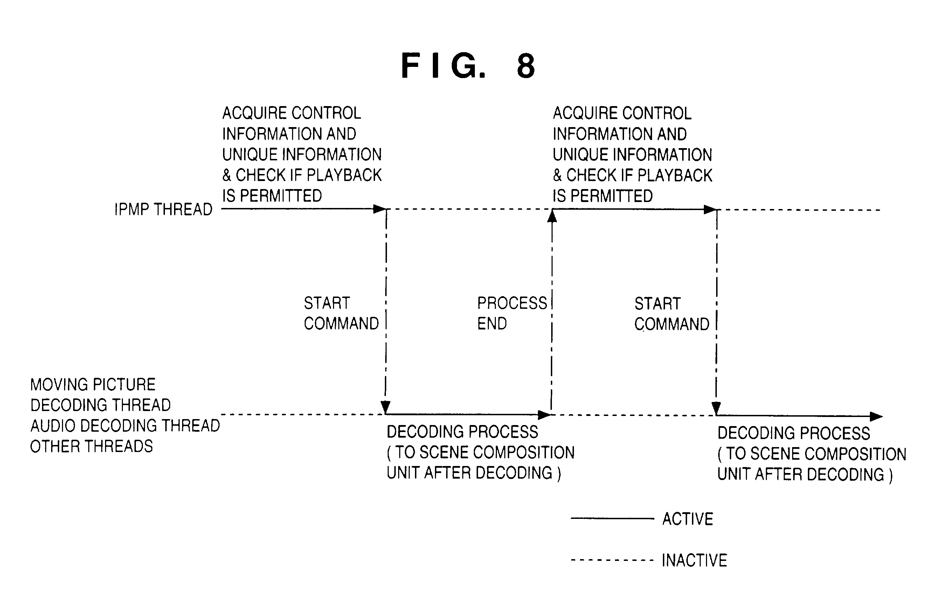

The operation according to the second embodiment will be explained below using the timing chart shown in Fig. 8.

An IPMP stream is processed by an IPMP thread, and a moving picture decoding thread, audio decoding thread, and the like are controlled by the IPMP thread. In case of a copyrighted stream, since a corresponding IPMP stream is present, the IPMP thread fetches this IPMP stream and acquires unique information.

Furthermore, the IPMP thread extracts the control information 121 embedded as a watermark from an object stream, and generates the determination information 122 used to determine permission/denial of playback of object data on the basis of such information. When the determination information 122 indicates permission of playback of object data, the IPMP thread issues a start command to a thread which processes that object data.

Upon receiving this command, the thread decodes object data, and sends the decoded data to the scene composition unit 122. After that, the thread sends a process end message to the IPMP thread. Upon receiving this message, the IPMP thread extracts control information 121 embedded as a watermark from an object stream again, and acquires unique information from the IPMP stream to generate determination information 121 so as to determine permission/denial of playback of object data. If playback is permitted, the IPMP tread issues a start command to a thread which processes that object data to start decoding. By repeating the aforementioned cycle, object data can be successively played back.

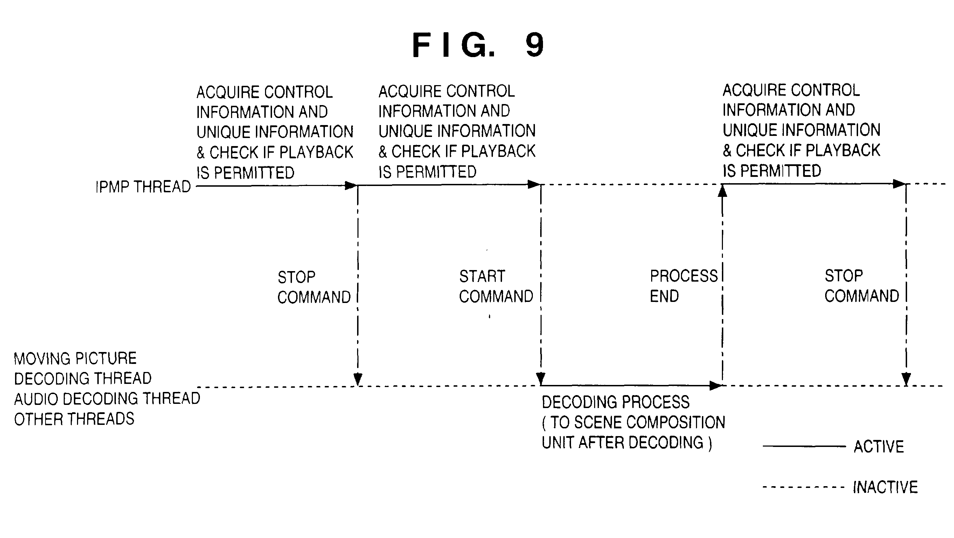

The operation executed when playback of the object stream is permitted has been explained. Also, the operation executed when playback of object data is alternately permitted and denied will be explained using the timing chart shown in Fig. 9.

The IPMP thread fetches an IPMP stream and acquires unique information. Furthermore, the IPMP thread extracts the control information 121 embedded as a watermark from an object stream, and generates the determination information 122 used to determine permission/denial of playback of object data on the basis of such information. If this determination information 122 indicates denial of playback of object data, the IPMP thread issues a stop command to a thread which processes that object data. Upon receiving this command, the thread stops and executes no process.

After the IPMP thread issues the stop command, it fetches an IPMP stream again, acquires the unique information, extracts the control information 121 embedded as a watermark from an object stream, and generates the determination information 122 used to determine permission/denial of playback of object data based on such information. If this determination information 122 changes to indicate permission of playback of the object data, the IPMP thread issues a start command to a thread which processes the object data. Upon receiving the start command, the thread decodes the object data, and sends the decoded data to the scene composition unit 112. After that, the thread sends a processing end message to the IPMP thread. Upon receiving this end message, the IPMP thread fetches an IPMP stream again, acquires unique information, extracts control information 121 embedded as a watermark from an object stream, and generates the determination information 122 used to determine permission/denial of playback of object data based on such information. If the determination information indicates denial of playback, the IPMP thread issues a stop command to a thread that processes the object data. In this manner, the thread does not execute any process.

With this operation, copyrighted data can undergo flexible playback control.

As described above, according to the second embodiment, in an apparatus which demultiplexes objects from a plurality of object streams each having predetermined information, a scene description information stream for compositing information contained in these object streams, and a datastream containing a management stream for protecting the intellectual property of scene description information, decodes the respective streams, and composites and outputs objects on the basis of information in the scene description stream, stop and execution of decoding of at least one of the plurality of object streams is controlled based on the determination information generated from the control information as information to be sent simultaneously with the object stream to be controlled, and the unique information contained in the management stream used to protect the intellectual property, the control information which is sent simultaneously with the object stream to be controlled is embedded as a digital watermark, and the object stream is decoded after the control information embedded in the object stream to be controlled is extracted. In this manner, no decoded data is present in a memory of the player, and copyrights can be prevented from being violated by an ill-disposed third party who copies data on the memory.

### [Third Embodiment]

An MPEG-4 player and an example of a scramble process of a sender apparatus according to the third embodiment of the present invention will be described below. Note that the arrangement of the MPEG-4 player according to the third embodiment is the same as that shown in Fig. 5, and a detailed description thereof will be omitted.

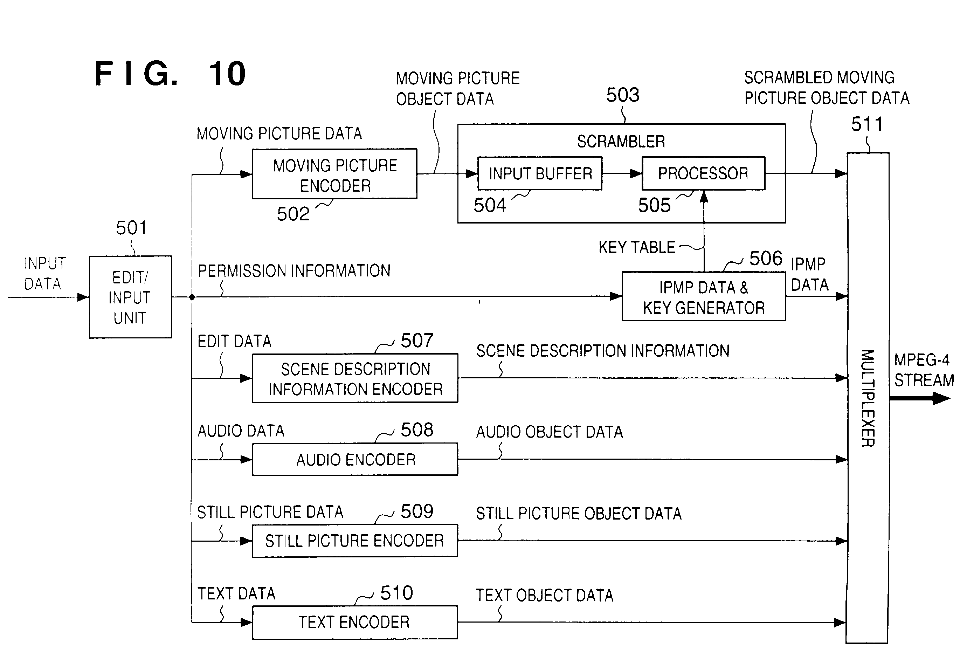

An example of the scramble process in the sender apparatus according to the third embodiment of the present invention will be explained below using Fig. 10.

In the third embodiment, a case will be examined below wherein one each moving picture data, audio data, still picture data, and text data are available as object data, and the moving picture data of these data is scrambled. Also, this embodiment adopts a two-step scramble process, i.e., moving picture object data is scrambled using key information, and the key information is scrambled using a user key which differs in units of players.

Fig. 10 is a block diagram showing the arrangement of a sender apparatus according to the third embodiment of the present invention.

The flow until an MPEG-4 stream (datastream) is generated will be briefly explained first.

Referring to Fig. 10, moving picture data input to an edit/input unit 501 is encoded by, e.g., MPEG-4, H-263, or the like by a moving picture encoder 502 to be converted into moving picture object data. Also, audio data is encoded by, e.g., CELP, TWINVQ, or the like by an audio encoder 508 to be converted into audio object data. Furthermore, still picture data is compressed by JPEG by a still picture encoder 509 to be converted into still picture object data. Furthermore, text data is converted by a text encoder 510 into text object data.

A player, which receives and plays back these encoded object data, requires scene description information for designating the composition method of these object data and the playback timings thereof. The scene description information is generated by encoding edit data, which is generated based on edit operations done by an editor at the edit/input unit 501, by a scene description information encoder 507.

The moving picture object data encoded by the moving picture encoder 502 is scrambled by a scrambler 503 to obtain scrambled moving picture object data, which is sent to a multiplexer 511.

An IPMP data & key generator 506 generates key information required for scrambling the moving picture object data, and sends it to the scrambler 503. Also, the generator 506 generates IPMP data which is required upon descrambling the scrambled moving picture object data in the player, and sends it to the multiplexer 511.

The multiplexer 511 multiplexes the scrambled object data, audio object data, still picture object data, text object data, IPMP data, and scene description information to generate an MPEG-4 stream.

The method of scrambling the moving picture object data will be described in more detail below.

Moving picture data such as an AVI (Audio Video Interleave) file or the like is input to the edit/input unit 501. The editor makes input operations for designating a portion, viewing of which is to be restricted by scrambling, of the moving picture object data at the edit/input unit 501. Note that as for a unit which designates a specific portion of the moving picture object data, frames are used in this embodiment. In such case, the number of frames that form an AVI file must be counted. Note that one frame is a unit which can form one image by only data contained in that frame (a moving picture is composed of a set of some frame images).

The number of frames can be counted based on information in the header of the AVI file, and the data size of the AVI file. Upon completion of counting, frames which form the input AVI file are displayed on a display screen (not shown) connected to the edit/input unit 501 together with their frame numbers. The editor determines frames, viewing of which is to be restricted, while observing this screen, and inputs view restriction information based on that determination at the edit/input unit 501.

If the number of frames per sec (frame rate) required for displaying an AVI file is constant, the display time and the number of frames can correspond to each other. Hence, view restriction may be made using time in place of frames. For example, if the frame rate is 10 fps (frames per second; this means that 10 frames per second are required to display an image), when view restriction is imposed on the range from the first to 20th frames, the editor can set view control for 2 seconds from the beginning of display.

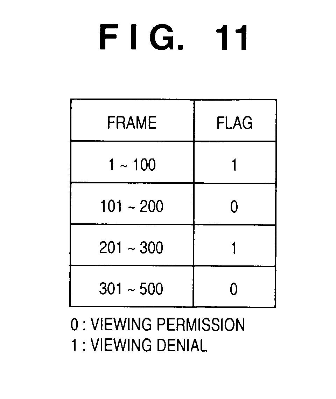

By inputting the view restriction information in this manner, the edit/input unit 501 generates permission information that indicates permission/denial of view in units of frames, as shown in, e.g., Fig. 11.

Fig. 11 shows an example of permission information generated when the editor makes continuous view restriction within the range from the first to 100th frames and the range from the 201st to 300th frames, and does not restrict other frames from viewing. In this case, the total number of frames is 500, and "1" is set as a flag in frames that undergo view restriction; "0" is set as a flag in other frames. As can be seen from Fig. 11, since the presence/absence of view restriction can be set even in one frame in minimum, flexible view restriction can be implemented. This permission information is sent from the edit/input unit 501 to the IPMP data & key generator 506.

The IPMP data & key generator 506 generates a key table required upon scrambling moving picture object data on the basis of the permission information sent from the edit/input unit 501. More specifically, the generator 506 generates key information Ksn (n = 1, 2,...) in a key generation routine and sets the key information in a frame (or frame range) set with a flag = "1" (view denial) with reference to the permission information. On the other hand, the generator 506 sets key information "0x00" in a frame (or frame range) set with a flag = "0".

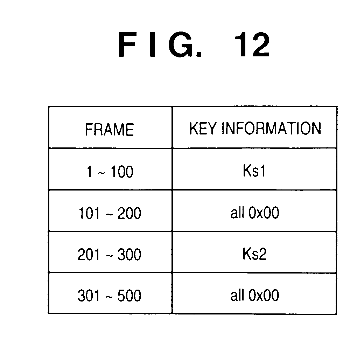

Fig. 12 shows an example of key information set in this manner.

As shown in Fig. 12, since the flag is set at "1" within the range from the first to 100th frames, key information Ksl is set by the key generation routine. Also, since the flag is set at "1" within the range from the 201st to 300th frames, key information Ks2 is set by the key generation routine.

On the other hand, in other frames, view of which is permitted, key information is "0x00". In Fig. 12, since there are two frame ranges that undergo view restriction, two pieces of key information Ksl and Ks2 are generated. If there are n frame ranges that undergo view restriction, n pieces of key information are generated.

The data length of key information used depends on the scramble algorithm adopted. For example, when DES (Data Encryption Standard) is used, the data length is 64 bits. As the key generation routine, for example, a process for generating a random number may be used. When key information is generated based on a random number, even if one key information is disclosed, another key information is hardly successfully estimated from that key information. The key table is sent from the key generator 506 to the scrambler 503 and is used in scrambling of moving picture object data.

The IPMP data & key generator 506 generates IPMP data using this key table. The IPMP data is multiplied with other object data by the multiplier 511, and is sent to the player. This IPMP data is required when the player descrambles the scrambled moving picture data, as described above.

More specifically, with reference to the key table, key information Ksn (n = 1, 2,...) of a frame (or frame range) whose key information is not "0x00" is scrambled using user key Kp (key information unique to each player) to obtain key information E(Kp, Ksn) of that frame (or frame range).

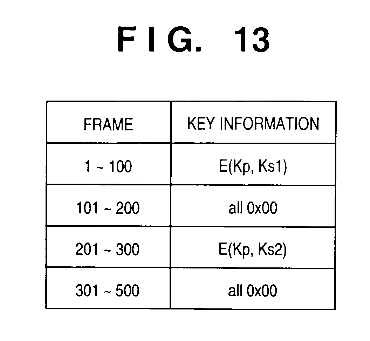

On the other hand, key information "0x00" of a frame (or frame range) remains unscrambled. The user key is shared by the player by some means. In this manner, IPMP data shown in Fig. 13 is generated.

Since key information Ksl of the first to 100th frames is not "0x00", and is scrambled using user key Kp of the player which receives an MPEG-4 stream generated by this apparatus, key information E(Kp, Ksl) is generated. Also, since key information Ks2 of the 201st to 300th frames is not "0x00", and is scrambled in the same manner as in the above frame range, key information E(Kp, Ks2) is generated.

Note that the data length of the user key depends on the scramble algorithm, and is 64 bits if DES is used. In the above description, key information of a frame (or frame range) set with a flag = "0" (view permission) is set to be "0x00", but it does not have any specific meaning and any other data format may be used.

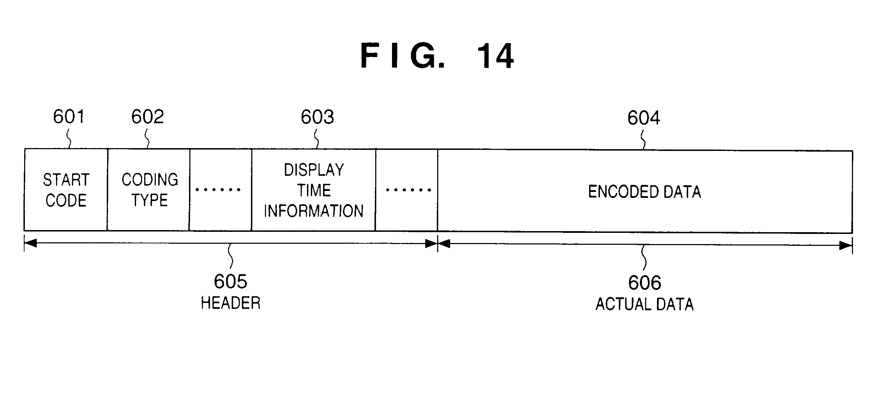

Fig. 14 shows an example of the data structure of moving picture data compressed by MPEG-4 according to the third embodiment of the present invention.

Referring to Fig. 14, moving picture data is made up of a header 605 and actual data 606. The header 606 includes information required for decoding and playing back data such as a start code 601 indicating the start of data, a coding type 602 indicating the type of encoded data 604 in the actual data 606, display time information 603 which pertains to the time for displaying moving picture data by the player, and the like. Also, the actual data 606 includes the encoded data 604 of an actual moving picture. Note that the start code 601 is 4-byte data, and its value is defined to be "0x000001B6" by the standards.

The process of the scrambler 503 will be described below.

Moving picture data of an AVI file input to the edit/input unit 501 undergoes high-efficiency encoding based on, e.g., MPEG-4 to obtain moving picture object data. This moving picture object data forms one data (one file), and is input to an input buffer 504 of scrambler 503.

The input buffer 504 segments the moving picture object data as one file into frames by searching for start code "0x000001B6". The segmented frame data is scrambled by a processor 505 in units of frames. In this case, the key table sent from the IPMP data & key generator 506 is used, and key information corresponding to each frame is determined with reference to this key table to scramble each frame data.

For example, in this embodiment, key information corresponding to data of the first frame is Ksl, and key information corresponding to data of the 100th frame is also Ksl, as can be seen from Fig. 12. Also, key information corresponding to the 101st frame is "0x00", and key information corresponding to the 299th frame is Ks2. Note that all frames of the moving picture object data are to be scrambled. That is, not only actual data but also the header are scrambled.

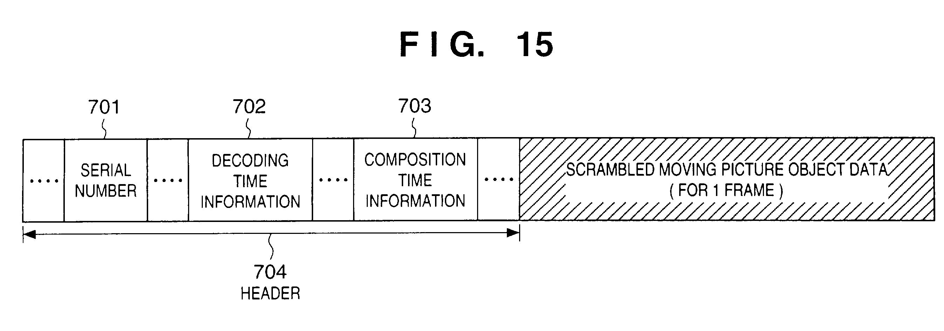

Furthermore, the multiplexer 511 that receives the scrambled moving picture object data appends a header 704 that includes decoding time information 702 required upon decoding in the player, composition time information 703 required upon composition, a data serial number 701, and the like to moving image object data of each frame, as shown in Fig. 15. By appending the header 704 to each frame, the player can easily count the number of frames.

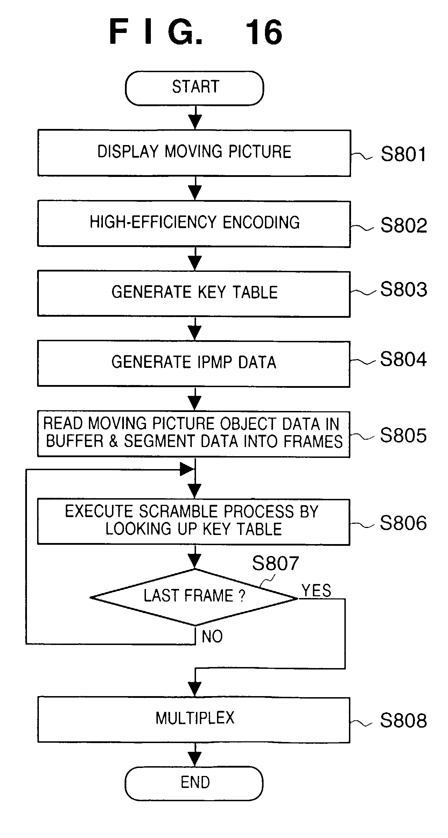

The operation of the sender apparatus according to the third embodiment of the present invention, and an example of the scramble process of moving picture object data will be explained using the flow chart in Fig. 16.

Fig. 16 is a flow chart for explaining the process executed when an MPEG-4 stream is finally generated by scrambling only moving picture object data according to editor's designation after moving picture data, audio data, still picture data, text data, and the like are input to the edit/input unit 501.

Referring to Fig. 16, when moving picture data is input to the edit/input unit 501, a display (not shown) connected to the edit/input unit 501 displays frame images that form the moving picture data together with their frame numbers in step S801. The editor determines a frame or frame range which is to undergo view restriction on the basis of the display, and inputs permission information that instructs view permission/denial. At the same time, the editor determines the layout and playback timings of audio data, still picture data, text data, and the like, and inputs such information.

The flow then advances to step S802, and the moving picture data, audio data, still picture data, and text data input to the edit/input unit 501 undergo high-efficiency encoding by their optimal methods to generate moving picture object data, audio object data, still picture object data, and text object data. Furthermore, edit data as information which pertains to the layout and timings of the individual objects input in step S801 is encoded to generate scene description information. Of these object data, the moving picture object data is supplied to the input buffer 504 in the scrambler 503, and other object data are supplied to the multiplexer 511.

In step S803, the IPMP data & key generator 506 generates a key table used in a scramble process on the basis of the permission information, and supplies it to the scrambler 503.

In step S804, IPMP data required upon descrambling scrambled moving picture data is generated based on the key table, and is supplied to the multiplexer 511.

In step S805, the moving picture object data is loaded onto the input buffer 504, and the number of frames is detected by detecting start codes of the respective frames. Also, the moving picture object data as one file is broken up into frames, and is supplied to the scrambler 505 in units of frames.

The flow then advances to step S806, and key information used in scrambling is specified with reference to the key table from the IPMP data & key generator 506 on the basis of the number of order of an input frame to scramble the frame.

The flow advances to step S807 to check if the serial number of the frame that has been scrambled in step S806 matches the total number of frames counted in step S805, i.e., the frame of interest is the last frame. If NO in step S807, the flow returns to step S806 to repeat the scramble process. If it is determined in step S807 that the frame of interest is the last frame, the flow advances to step S808, and the multiplexer 511 appends a header 704 including decoding time information 702 required upon decoding in the player, composition time information 703 required upon composition, a data serial number 701, and the like to each object data to generate a multiplexed MPEG-4 stream.

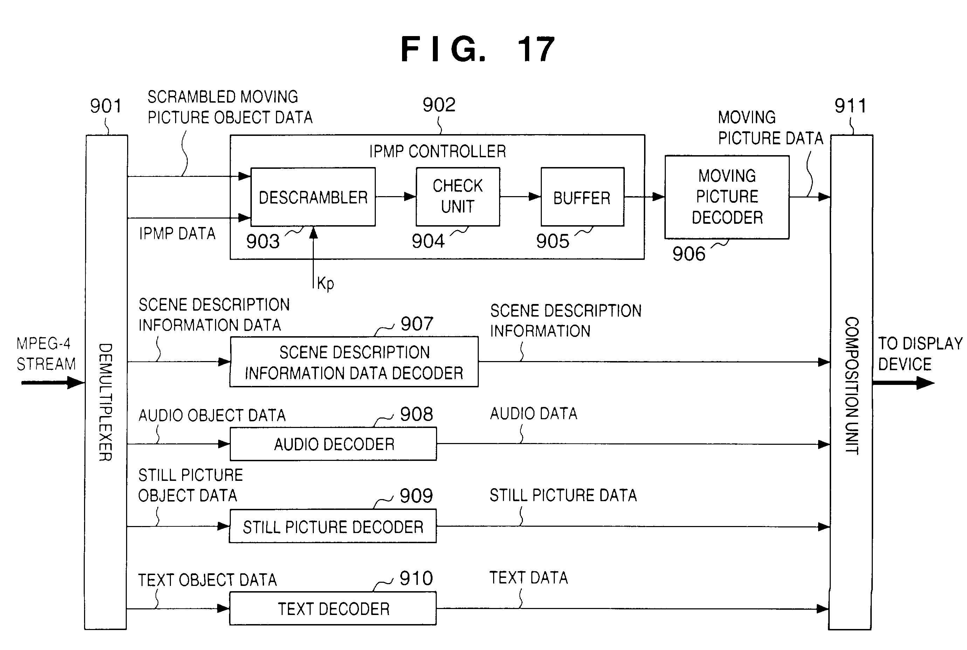

Fig. 17 is a block diagram showing the arrangement of a player according to the third embodiment of the present invention, which plays back the MPEG-4 stream which has been scrambled, as described above.

The flow from when an MPEG-4 stream is input until an image is displayed on a display (not shown) of the player will be briefly explained first.

The input MPEG-4 stream is demultiplexed by a demultiplexer 901 into scrambled moving picture object data, IPMP data, scene description information, audio object data, still picture object data, and text object data, which are respectively input to corresponding decoders 907 to 910. These decoders 907 to 910 have internal memories, and each object data is processed after it is stored in the memory. Note that the scrambled moving picture object data and IPMP data are input to an IPMP controller 902.

The IPMP controller 902 descrambles the input data using the IPMP data, and then inputs moving picture object data to a moving picture decoder 906.

The decoders 906 to 910 decode object data in accordance with the decoding time information included in the header of each object data to generate moving picture data, scene description information, audio data, still picture data, and text data. These data are composed by a composition unit 911 in accordance with composition time information included in the header of each object data, and the scene description information, and are sent to and displayed by the display.

An example of the method of descrambling moving picture object data will be explained below.

The IPMP data sent to a descrambler 903 is, for example, the aforementioned data shown in Fig. 13. The descrambler 903 descrambles E(Kp, Ksn) (n = 1, 2,...) of a frame (or frame range) whose key information is not "0x00" using user key Kp shared in advance with the sender apparatus.

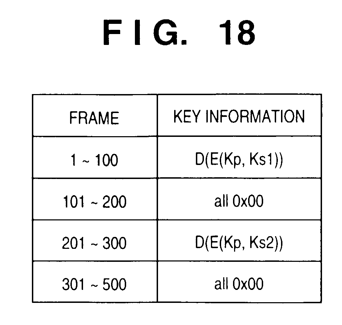

On the other hand, key information of a frame (or frame range) set with key information "0x00" remains unchanged. In this manner, a descramble key table shown in Fig. 18 is generated. In this embodiment, since key information of the first to 100th frames is not "0x00", D(E(Kp, Ks1)) obtained by descrambling key information E(Kp, Ks1) is used as key information. Also, since key information of the 201st to 300th frames is not "0x00", D(E(Kp, Ks2)) obtained by descrambling key information E(Kp, Ks2) is used as key information. This descramble key table is sent to the descrambler 903.

On the other hand, the scrambled moving picture object data is supplied to and processed by the descrambler 903 in units of frames. At this time, the serial number of a frame can be detected based on that (see Fig. 15) assigned by the multiplexer 511. Descramble key information is specified using the descramble key table to descramble scrambled data.

For example, as can be seen from Fig. 18, key information corresponding to data of the first frame is D(E(Kp, Ksl)), and key information corresponding to data of the 100th frame is also D(E(Kp, Ks1)). On the other hand, key information corresponding to the 101st frame is "0x00", and key information corresponding to the 299th frame is D(E(Kp, Ks2)). In this case, in the 101st to 200th frames and 301st to 500th frames which are not set with view denial, since key information used in scramble matches key information used in descramble, i.e., "0x00", the data of each frame matches original data before being scrambled.

Descramble key information of the first to 100th frames is D(E(Kp, Ks1)), and that of the 201st to 300th frame is D(E(Kp, Ks2)). In this case, if user keys Kp shared by the sender apparatus and player in advance match, since D(E(Kp, Ks1)) = Ks1 and D(E(Kp, Ks2)) = Ks2, key information used in scramble matches key information used in descramble, and the data of each frame matches original data before being scrambled.

However, if the sender apparatus and player have different user keys Kp, since D(E(Kp, Ks1)) ≠ Ksl and D(E(Kp, Ks2)) ≠ Ks2, key information used in scramble does not match key information used in descramble, and the data of each frame does not match original data before being scrambled.

After that, each descrambled frame data is supplied to a check unit 904 to check the start code stored in its header. If the value of this start code is "0x000001B6", it is determined that the data is normally descrambled, and the IPMP controller 902 supplies data to a buffer 905.

On the other hand, if the value of the start code is not "0x000001B6", it is determined that the data is not normally descrambled, and no data is supplied to the buffer 905. Since the moving picture decoder 906 decodes data in the buffer 905, it does not execute decoding if no data is stored in the buffer 905.

That is, if user keys Kp shared by the sender apparatus and player match, since the data of each frame matches original data before being scrambled, the start code assumes a value "0x000001B6". As a result, since data is supplied to the buffer 905, the moving picture decoder 906 can decode, and the viewer can view and listen to video and sound played back by this player. On the other hand, if user keys Kp of the sender apparatus and player do not match, the start code does not assume a value "0x000001B6". For this reason, no data is supplied to the buffer 905. In this case, a moving picture is never decoded and, consequently, the user cannot view that moving picture by players other than an authentic one.

According to the aforementioned method, only a player which shares the same user key Kp as that of the sender apparatus can play back moving picture data which is set with view restriction at the sender apparatus.

By giving the user key used in the sender apparatus to a person or player authorized by the copyright holder, only the authentic person or player can play back copyrighted object data, thus implementing copyrighted data protection by means of scrambling.

In the above embodiment, object data include one each moving picture data, audio data, still picture data, and text data. However, the present invention is not limited to this. For example, when a plurality of object data of the same kind are present or when all these object data are to be scrambled, the same scramble method as in the above embodiment can be used, and copyright protection can be implemented.

In the above embodiment, a two-step scramble process is done, i.e., moving picture object data is scrambled using key information, and scramble key information is scrambled using a user key which differs in units of players. Alternatively, using three or more keys, a three- or four-step scramble process can be achieved.

With the aforementioned process, protection in units of object data in MPEG-4, that cannot be attained by the prior arts, can be attained.

Note that the embodiments have been individually explained, but the present invention is not limited to such specific embodiments. That is, the arrangements of the above embodiments may be solely used or combined appropriately.

Note that the present invention may be applied to either a system constituted by a plurality of devices (e.g., a host computer, an interface device, a reader, a printer, and the like), or an apparatus consisting of a single equipment (e.g., a copying machine, a facsimile apparatus, or the like).

The present invention may also be achieved by supplying a storage medium (or recording medium), which records a program code of a software program that can implement the functions of the above-mentioned embodiments to the system or apparatus, and reading out and executing the program code stored in the storage medium by a computer (or a CPU or MPU) of the system or apparatus. In this case, the program code itself read out from the storage medium implements the functions of the above-mentioned embodiments, and the storage medium which stores the program code constitutes the present invention. The functions of the above-mentioned embodiments may be implemented not only by executing the readout program code by the computer but also by some or all of actual processing operations executed by an OS (operating system) running on the computer on the basis of an instruction of the program code.

Furthermore, the functions of the above-mentioned embodiments may be implemented by some or all of actual processing operations executed by a CPU or the like arranged in a function extension board or a function extension unit, which is inserted in or connected to the computer, after the program code read out from the storage medium is written in a memory of the extension board or unit.

The present invention is not limited to the above embodiments and various changes and modifications can be made within the spirit and scope of the present invention. Therefore, to apprise the public of the scope of the present invention, the following claims are made.

## Claims

1. A data processing method for demultiplexing object streams from a datastream that contains a plurality of object streams each having predetermined information, and playing back the object streams, characterised by comprising the steps of:
extracting unique information contained in the datastream;
extracting control information contained in an object stream to be controlled; and
determining based on at least one of the extracted unique information and control information if a playback process of the object stream to be controlled is permitted.

2. The method according to claim 1, characterised in that the control information is embedded as a digital watermark in the object stream to be controlled.

3. The method according to claim 1 or 2, characterised in that information of the object stream to be controlled has undergone high-efficiency encoding, and whether or not the information that has undergone high-efficiency encoding is decoded is determined in accordance with the control information.

4. The method according to any one of claims 1-3, characterised in that the plurality of object streams contain at least one of an audio object stream, still picture object stream, moving picture stream, and computer graphics stream, and a scene description information stream used to composite objects.

5. A data processing method for demultiplexing objects from a datastream containing a plurality of object streams each having predetermined information, a scene description information stream used to composite information contained in the plurality of object streams, and a management stream used to protect an intellectual property of the information, decoding the streams, and compositing and outputting the objects on the basis of information of the scene description information stream, characterised by comprising the steps of:
extracting unique information contained in the management stream in the datastream;
extracting control information contained as a digital watermark in an object stream to be controlled; and
determining based on at least one of the extracted unique information and control information if a playback process of the object stream to be controlled is permitted.

6. A data processing apparatus characterised by comprising:
input means (101) for inputting a datastream containing a plurality of object streams each having predetermined information;
demultiplexing means (102) for demultiplexing the plurality of object streams from the datastream input by said input means;
decoding means (107-110) for decoding the plurality of object streams demultiplexed by said demultiplexing means;
extraction means (111, 205) for extracting unique information contained in the datastream;
control information extraction means (202) for extracting control information of an object stream to be controlled; and
control means (204, 207) for controlling a playback process of the object stream to be controlled on the basis of at least one of the unique information and control information.

7. The apparatus according to claim 6, characterised in that the control information contained in the object stream to be controlled is embedded as a digital watermark in that object stream.

8. The apparatus according to claim 6 or 7, characterised in that the object stream to be controlled has undergone high-efficiency encoding, and said control means controls decoding of the information that has undergone high-efficiency encoding.

9. The apparatus according to any one of claims 6-8, characterised in that the object streams contain scene description information for composition, and at least one of an audio object stream, still picture object stream, moving picture stream, and computer graphics stream.

10. A data processing apparatus for demultiplexing objects from a datastream containing a plurality of object streams each having predetermined information, a scene description information stream used to composite information contained in the plurality of object streams, and a management stream used to protect an intellectual property of the information, decoding the streams, and compositing and outputting the objects on the basis of information of the scene description information stream, characterised by comprising:
extraction means for extracting unique information contained in the management stream in the datastream;
control information extraction means for extracting control information contained as a digital watermark in an object stream to be controlled; and
control means for determining based on at least one of the extracted unique information and control information if a playback process of the object stream to be controlled is permitted.

11. A data processing method for demultiplexing an object stream from a datastream that contains the object streams having predetermined information, and playing back the object stream, characterised by comprising the steps of:
extracting copyright information contained in the datastream;
generating key information using at least one of ID information unique to a user or an apparatus that receives and plays back the datastream, and the copyright information; and
controlling to descramble the object stream on the basis of the key information.

12. The method according to claim 11, characterised by further comprising the step of:
extracting watermark information contained in the object stream, and generating key information of the object stream using at least one of the ID information, copyright information, and watermark information.

13. The method according to claim 12, characterised in that the watermark information is embedded as a digital watermark in the object stream.

14. The method according to claim 12, characterised in that the key information is generated on the basis of the watermark information and authentication information, which is generated based on the copyright information and ID information.

15. The method according to any one of claims 11-14, characterised in that the copyright information is contained in a stream used to protect and manage an intellectual property.

16. The method according to nay one of claims 11-15, characterised in that the ID information is set in a data processing apparatus which demultiplexes, descrambles, and plays back the object stream.

17. The method according to claim 16, characterised in that the ID information is pre-stored in a storage medium which can be connected to the data processing apparatus.

18. The method according to any one of claims 11-17, characterised in that information of the object stream has undergone high-efficiency encoding.

19. The method according to any one of claims 11-18, characterised in that the datastream at least contains at least one of an audio object stream, still picture object stream, moving picture stream, and computer graphics stream, and a scene description information stream used to composite objects.

20. A data processing method for demultiplexing an object stream from a datastream that contains the object stream having predetermined information, and playing back the object stream, characterised by comprising the steps of:
extracting watermark information contained in the object stream;
generating key information using at least one of ID information unique to a user or an apparatus that receives and plays back the datastream, and the watermark information; and
controlling to descramble the object stream on the basis of the key information.

21. The method according to claim 20, characterised in that information of the object stream has undergone high-efficiency encoding.

22. The method according to claim 20 or 21, characterised in that the datastream at least contains at least one of an audio object stream, still picture object stream, moving picture stream, and computer graphics stream, and a scene description information stream used to composite objects.

23. A data processing method for demultiplexing an object stream from a datastream containing at least one scrambled object stream having predetermined information, a scene description information stream used to composite information contained in the object stream, and a management stream used to protect an intellectual property of the information, descrambling and decoding the scrambled object stream, and compositing and outputting decoded data on the basis of information of the scene description information stream, characterised by comprising the steps of:
extracting copyright information contained in the datastream;
generating key information using at least one of ID information unique to a user or an apparatus that receives and plays back the datastream, and the copyright information; and
controlling to descramble and decode the scrambled object stream on the basis of the key information.

24. A data processing method for demultiplexing an object stream from a datastream containing at least one scrambled object stream having predetermined information, a scene description information stream used to composite information contained in the object stream, and a management stream used to protect an intellectual property of the information, descrambling and decoding the scrambled object stream, and compositing and outputting decoded data on the basis of information of the scene description information stream, characterised by comprising the steps of:
extracting watermark information contained in the datastream;
generating key information using at least one of ID information unique to a user or an apparatus that receives and plays back the datastream, and the watermark information; and
controlling to descramble and decode the scrambled object stream on the basis of the key information.

25. A data processing apparatus characterised by comprising:
input means (101) for inputting a datastream containing at least one scrambled object stream having predetermined information;
demultiplexing means (102) for demultiplexing the object stream from the datastream input by said input means;
copyright information extraction means (111) for extracting copyright information contained in the datastream;
key information generation means (405) for generating key information using the copyright information;
descramble means (207) for descrambling the object stream demultiplexed by said demultiplexing means on the basis of the key information; and
decoding means (107-110) for decoding the object stream descrambled by said descramble means to obtain the predetermined information.

26. The apparatus according to claim 25, characterised by further comprising:
watermark extraction means for extracting watermark information contained in the object stream, and
wherein said key information generation means generates the key information using at least one of the copyright information and watermark information.

27. The apparatus according to claim 26, characterised in that the watermark information is embedded as a digital watermark in the object stream.

28. The apparatus according to claim 26, characterised by further comprising:
acquisition means for acquiring ID information pre-stored in said data processing apparatus or a storage medium that can be connected to said data processing apparatus, and
wherein said key information generation means generates the key information using at least one of the copyright information, watermark information, and ID information.

29. The apparatus according to claim 28, further comprising:
authentication information processing means for generating authentication information on the basis of the copyright information and ID information, and
wherein said key information generation means generates the key information on the basis of the authentication information and watermark information.

30. The apparatus according to any one of claims 25-29, wherein the datastream at least contains at least one of an audio object stream, still picture object stream, moving picture stream, and computer graphics stream, and a scene description information stream used to composite objects.

31. A data processing apparatus characterised by comprising:
input means for inputting a datastream containing at least one scrambled object stream having predetermined information;
demultiplexing means for demultiplexing the object stream from the datastream input by said input means;
watermark information extraction means for extracting watermark information contained in the object stream;
key information generation means for generating key information using the watermark information;
descramble means for descrambling the object stream demultiplexed by said demultiplexing means on the basis of the key information; and
decoding means for decoding the object stream descrambled by said descramble means to obtain the predetermined information.

32. The apparatus according to claim 31, characterised by further comprising:
acquisition means for acquiring ID information pre-stored in said data processing apparatus or a storage medium that can be connected to said data processing apparatus, and
wherein said key information generation means generates the key information using at least one of the watermark information and ID information.

33. The apparatus according to claim 31 or 32, characterised in that the watermark information is embedded as a digital watermark in the object stream.

34. The apparatus according to any one of claims 31-33, characterised in that the datastream at least contains at least one of an audio object stream, still picture object stream, moving picture stream, and computer graphics stream, and a scene description information stream used to composite objects.

35. A data processing apparatus characterised by comprising:
input means (402) for inputting permission information indicating whether or not input data is protected using a predetermined unit of the input data as a reference unit;
detection means for detecting the predetermined unit of the input data;
generation means (405, 406) for generating control data for a scramble process of the input data, and protect data indicating contents of the scramble process on the basis of the permission information;
scramble means (404) for scrambling the input data in accordance with the predetermined unit detected by said detection means, and the control data; and
multiplexing means (411) for multiplexing the input data scrambled by said scramble means and the protect data, and transmitting the multiplexed data.

36. The apparatus according to claim 35, characterised in that the input data has undergone high-efficiency encoding.

37. The apparatus according to claim 35 or 36, characterised in that the input data is image data, and the predetermined unit is a frame unit.

38. The apparatus according to claim 35 or 36, characterised in that the input data is made up of a plurality of object data.

39. The apparatus according to any one of claims 35-38, characterised in that the plurality of object data contain at least one of an audio object data, still picture object data, moving picture object data, computer graphics object data, and text object data, and scene description information used to composite objects.

40. The apparatus according to any one of claims 35-39, characterised in that said multiplexing means packetizes the input data for each predetermined unit.

41. The apparatus according to any one of claims 35-40, characterised in that the control data generated by said generation means is key information used in the scramble process of said scramble means.

42. A data processing apparatus characterised by comprising:
input means for inputting multiplexed data obtained by multiplexing encoded data which is scrambled in a predetermined unit of data, and protect data indicating scramble contents of the encoded data;
demultiplexing means for demultiplexing the encoded data and protect data from the multiplexed data;
detection means for detecting data of the predetermined unit of data in the encoded data;
generation means for generating control data for descrambling the scrambled encoded data from the protect data; and
descramble means for descrambling the encoded data in accordance with a detection result of said detection means and the control data.

43. The apparatus according to claim 42, characterised by further comprising:
decoding means for decoding the descrambled encoded data.

44. The apparatus according to claim 42 or 43, characterised in that the scrambled encoded data contains a start code indicating start of the predetermined unit of data, and said apparatus further comprises:
start code detection means for detecting the start code; and
control means for controlling supply of the encoded data to said decoding means in accordance with a detection result of said start code detection means.

45. The apparatus according to any one of claims 42-44, characterised in that the scrambled data is data obtained by scrambling data that has undergone high-efficiency encoding.

46. The apparatus according to any one of claims 42-45, characterised in that the scrambled encoded data contains a plurality of object data, and at least one of the object data is scrambled.

47. The apparatus according to claim 46, characterised in that the plurality of object data contain at least one of an audio object data, still picture object data, moving picture object data, computer graphics object data, and text object data, and scene description information used to composite objects.

48. The apparatus according to any one of claims 42-47, characterised in that the control data indicates key information used in the descramble means.

49. A data processing method characterised by comprising:
the input step of inputting permission information indicating whether or not input data is protected in a predetermined unit of the input data;
the detection step of detecting the predetermined unit of the input data;
the generation step of generating control data for a scramble process of the input data, and protect data indicating contents of the scramble process on the basis of the permission information;
the scramble step of scrambling the input data in accordance with the predetermined unit of the input data detected in the detection step, and the control data; and
the multiplexing step of multiplexing the input data scrambled in the scramble step and the protect data, and transmitting the multiplexed data.

50. The method according to claim 49, characterised in that the input data has undergone high-efficiency encoding.

51. The method according to claim 49 or 50, characterised in that the input data is picture data, and the predetermined unit is a frame of the picture.

52. The method according to any one of claims 49-51, characterised in that the input data is made up of a plurality of object data.

53. The method according to claim 52, characterised in that the plurality of object data contain at least one of an audio object data, still picture object data, moving picture object data, computer graphics object data, and text object data, and scene description information used to composite objects.

54. A data processing method characterised by comprising:
the input step of inputting multiplexed data obtained by multiplexing encoded data which is scrambled in a predetermined unit of data, and protect data indicating scramble contents of the encoded data;
the demultiplexing step of demultiplexing the encoded data and protect data from the multiplexed data;
the detection step of detecting data of the predetermined unit of data in the encoded data;
the generation step of generating control data for descrambling the scrambled encoded data from the protect data; and
the descramble step of descrambling the encoded data in accordance with a detection result in the detection step and the control data.

55. The method according to claim 54, characterised by further comprising:
the decoding step of decoding the descrambled encoded data.

56. The method according to claim 54 or 55, characterised in that the scrambled encoded data contains a plurality of object data, and at least one of the object data is scrambled.

57. The method according to claim 56, characterised in that the plurality of object data contain at least one of an audio object data, still picture object data, moving picture object data, computer graphics object data, and text object data, and scene description information used to composite objects.

58. A computer readable storage medium which stores a program for implementing a data processing method for demultiplexing object streams from a datastream that contains a plurality of object streams each having predetermined information, and playing back the object streams, characterised by comprising:
a step module of extracting unique information contained in the datastream;
a step module of extracting control information contained in an object stream to be controlled; and
a determination module of determining based on at least one of the extracted unique information and control information if a playback process of the object stream to be controlled is permitted.

59. A computer readable storage medium which stores a program for implementing a data processing method for demultiplexing objects from a datastream containing a plurality of object streams each having predetermined information, a scene description information stream used to composite information contained in the plurality of object streams, and a management stream used to protect an intellectual property of the information, decoding the streams, and compositing and outputting the objects on the basis of information of the scene description information stream, characterised by comprising:
a step module of extracting unique information contained in the management stream in the datastream;
a step module of extracting control information contained as a digital watermark in an object stream to be controlled; and
a determination module of determining based on at least one of the extracted unique information and control information if a playback process of the object stream to be controlled is permitted.

60. A computer readable storage medium which stores a control program for implementing a data processing method for demultiplexing an object stream from a datastream that contains at least one scrambled object stream having predetermined information, and playing back the object stream, characterised by comprising:
a step module of extracting copyright information contained in the datastream;
a step module of generating key information using the copyright information; and
a step module of descrambling the object stream on the basis of the key information.

61. A computer readable storage medium which stores a control program for implementing a data processing method for demultiplexing an object stream from a datastream that contains at least one scrambled object stream having predetermined information, and playing back the object stream, characterised by comprising:
a step module of extracting watermark information contained in the object stream;
a step module of generating key information using the watermark information; and
a step module of descrambling the object stream on the basis of the key information.

62. A computer readable storage medium which stores a control program for implementing a data processing method for demultiplexing an object stream from a datastream that contains at least one scrambled object stream having predetermined information, and playing back the object stream, characterised by comprising:
a step module of acquiring ID information unique to a user who plays back the data stream or a playback apparatus;
a step module of generating key information using the ID information; and
a step module of descrambling the object stream on the basis of the key information.

63. A computer readable storage medium which stores a control program for implementing a data processing method for demultiplexing an object stream from a datastream that contains at least one scrambled object stream having predetermined information, and playing back the object stream, characterised by comprising:
an input step module of inputting permission information indicating whether or not input data is protected in a predetermined unit of the input data;
a detection step module of detecting the predetermined unit of the input data;
a generation step module of generating control data for a scramble process of the input data, and protect data indicating contents of the scramble process on the basis of the permission information;
a scramble step module of scrambling the input data in accordance with the predetermined unit of the input data detected in the detection step, and the control data; and
a multiplexing step module of multiplexing the input data scrambled in the scramble step and the protect data, and transmitting the multiplexed data.

64. A computer readable storage medium which stores a control program for implementing a data processing method for demultiplexing an object stream from a datastream that contains at least one scrambled object stream having predetermined information, and playing back the object stream, characterised by comprising:
an input step module of inputting multiplexed data obtained by multiplexing encoded data which is scrambled in a predetermined unit of data, and protect data indicating scramble contents of the encoded data;
a demultiplexing step module of demultiplexing the encoded data and protect data from the multiplexed data;
a detection step module of detecting data of the predetermined unit in the encoded data;
a generation step module of generating control data for descrambling the scrambled encoded data from the protect data; and
a descramble step module of descrambling the encoded data in accordance with a detection result in the detection step and the control data.

65. A data processing system having a sender apparatus and receiver apparatus,
said sender apparatus comprising:
embedding means for embedding watermark information in an object stream as a digital watermark; and
means for inserting copyright information in a predetermined datastream, and
said receiver apparatus comprising:
input means for inputting a datastream containing a scrambled object stream having predetermined information;
demultiplexing means for demultiplexing the object stream from the datastream input by said input means;
extraction means for extracting watermark information contained in the object stream, and copyright information contained in the datastream;
key information generation means for generating key information using at least one of the watermark information and copyright information;
descramble means for descrambling the object stream demultiplexed by said demultiplexing means on the basis of the key information; and
decoding means for decoding the object stream descrambled by said descramble means to obtain the predetermined information.
